# EUROPEAN PATENT APPLICATION

(11) **EP 4 636 554 A1**
(43) Date of publication of application: **22.10.2025**
(21) Application number: 24829909.1
(22) Date of filing: 29.02.2024
(51) Int. Cl.: G06F 3/04817

(54) **OBJECT PROCESSING METHOD, ELECTRONIC DEVICE, AND STORAGE MEDIUM**

(30) Priority: 29.06.2023 CN 202310794417
(71) Applicant: Honor Device Co., Ltd., Shenzhen, Guangdong 518040 (CN)
(72) Inventor: YANG, Yuanyuan, Shenzhen, Guangdong 518040 (CN); ZHU, Bin, Shenzhen, Guangdong 518040 (CN); YU, Ziwei, Shenzhen, Guangdong 518040 (CN); LIANG, Shuang, Shenzhen, Guangdong 518040 (CN)
(74) Representative: Goddar, Heinz J.
(86) International application number: PCT/CN2024/079392
(87) International publication number: WO 2025/001253

(57) **Abstract**

This application provides an object processing method, an electronic device, and a storage medium, and relates to the field of terminal application technologies. **In** the method, when an electronic device displays a first interface, the electronic device may be triggered, by using a gesture, to display a multi-layer interface. A partial area of an image of the first interface is displayed in a left-side area of the multi-layer interface, one or more application icons are displayed in a right-side area, and one or more objects are displayed in a middle area. A user drags the object in the middle area to an area above the partial area of the image of the first interface on the left side, to trigger the electronic device to display another interface of an application to which the first interface belongs. The another interface displays content related to the object. The user may alternatively drag the object in the middle area to an area above the application icon on the right side, to trigger the electronic device to display an interface of an application corresponding to the application icon. The interface displays content related to the object. **In** this manner, the object can be simply and quickly processed.

## Description

This application claims priority to Chinese Patent Application No. 202310794417.9, filed with the China National Intellectual Property Administration on June 29, 2023 and entitled "OBJECT PROCESSING METHOD, ELECTRONIC DEVICE, AND STORAGE MEDIUM", which is incorporated herein by reference in its entirety.

### TECHNICAL FIELD

Embodiments of this application relate to the field of terminal application technologies, and in particular, to an object processing method, an electronic device, and a storage medium.

### BACKGROUND

As electronic devices provide increasing functions, people increasingly rely on the electronic devices for activities related to work, life, and the like. For example, people may perform related processing on objects (for example, a document, a video, audio, a picture, a text, and a link) stored in the electronic devices.

Currently, when a user processes an object in an electronic device, a plurality of operations need to be performed. For example, the user finds a picture in Gallery of the electronic device, and taps a share button in an interface displaying the picture, to trigger the electronic device to display an icon of an application that can share the picture, for example, a Bluetooth icon or an icon of an instant messaging application. The user taps the icon of the instant messaging application to trigger the electronic device to display a friends list in the instant messaging application. The user taps a friend in the friends list to send the picture to the selected friend. It may be understood that the object processing method has cumbersome operations and is inefficient, causing relatively low user experience.

### SUMMARY

Embodiments of this application provide an object processing method, an electronic device, and a storage medium, to provide an efficient manner with simple operations to implement operation processing on an object.

To achieve the foregoing objective, the following technical solutions are used in this application:
According to a first aspect, an embodiment of this application provides an object processing method, including:
When displaying a first interface, an electronic device receives a first operation.

The electronic device displays a second interface in response to the first operation. The second interface includes a first object, an icon of a first application, and an icon of a second application, and the first object corresponds to content of the first application.

The electronic device receives a second operation of dragging the first object to an area in which the icon of the second application is located and releasing the first object.

The electronic device displays a third interface of the second application in response to the second operation. The third interface displays content associated with the first object.

In this application, the electronic device may be triggered, by using the first operation, to display the second interface including the icon of the first application, the icon of the second application, and the first object. A user may drag the first object in the second interface to an area above the icon of the second application, so that the electronic device is triggered to display content that is of the second application and that is associated with the first object. In this processing manner, the first object can be quickly found by using the first operation, and the object can be quickly processed by using the second operation. Therefore, the manner in which the second operation is used to enable the second application to process the first object is simple in operation and relatively efficient, and therefore achieves better user experience.

In an implementation of the first aspect, the second operation includes a third operation and a fourth operation.

That the electronic device receives a second operation of dragging the first object to an area in which the icon of the second application is located and releasing the first object includes:
The electronic device receives the third operation of selecting the first object.

The electronic device displays a first control in the second interface in response to the third operation. Content of the first object is displayed on the first control.

The electronic device receives the fourth operation of dragging the first control to the area in which the icon of the second application is located and releasing the first control. The fourth operation is a dynamic gesture operation continuous with the third operation.

Correspondingly, that the electronic device displays a third interface of the second application in response to the second operation includes:
The electronic device displays the third interface of the second application in response to the fourth operation.

In this application, the second operation may include the third operation of selecting the first object and the fourth operation of dragging the first object to the area above the icon of the second application. Because the second operation is not intended to delete the first object from the second interface, in an actual application, a process of moving the first object may be a process of moving the first control displaying the first object, and the process indicates the second application to which the first control is moved to process the first object corresponding to the first control.

In another implementation of the first aspect, the electronic device includes a display screen, the first object in the second interface is displayed in a first area of the display screen, and the icon of the first application and the icon of the second application in the second interface are displayed in a second area of the display screen.

When the first operation is an operation of sliding leftward from a right edge of the display screen, the first area is located on the left side of the second area; and
when the first operation is an operation of sliding rightward from a left edge of the display screen, the first area is located on the right side of the second area.

In this application, diversified manners in which the first operation triggers the electronic device to display the second interface are provided. Similarly, content displayed in the second interface may also be related to the first operation.

In another implementation of the first aspect, the first interface is an interface of a third application, the second interface displayed by the electronic device in response to the first operation further includes a first image, and the first image is a part of content of the first interface; and when the electronic device displays the second interface, the method further includes:
The electronic device receives a fifth operation of dragging the first object to an area in which the first image is located and releasing the first object.

The electronic device displays a fourth interface of the third application in response to the fifth operation. The fourth interface displays content associated with the first object.

In this application, the second interface may further display a part of content of the first interface before the second interface in a form of an image. The user triggers, by dragging the first object to an area of the image, the electronic device to display the fourth interface of the third application to which the first interface belongs. The user can use the fifth operation to enable the third application to process the first object.

In another implementation of the first aspect, the electronic device includes a display screen, the first image in the second interface is displayed in a third area of the display screen, and the first object in the second interface is displayed in a first area of the display screen.

When the first operation is an operation of sliding leftward from a right edge of the display screen, the third area is located on the left side of the first area; and
when the first operation is an operation of sliding rightward from a left edge of the display screen, the third area is located on the right side of the first area.

In this application, diversified manners in which the first operation triggers the electronic device to display the second interface are provided. Similarly, content displayed in the second interface may also be related to the first operation. For example, when leftward sliding is performed, the originally displayed first interface is displayed on the left side; and when rightward sliding is performed, the originally displayed first interface is displayed on the right side, so that visual experience of the user is improved.

In another implementation of the first aspect, the electronic device includes a display screen, and before the electronic device displays the first interface, the method further includes:
When displaying a fifth interface, the electronic device receives a sixth operation of dragging a second object in the fifth interface to a fourth area of the display screen.

The electronic device displays a sixth interface in response to the sixth operation, where the sixth interface includes the icon of the first application; and the electronic device receives a seventh operation of dragging the second object in the fourth area to an area in which the icon of the first application is located and releasing the second object.

The electronic device displays the fifth interface or a seventh interface in response to the seventh operation. The fifth interface displays, for first duration, information indicating that storage succeeds, the seventh interface displays content of the first application, and the content of the first application includes the first object.

In this application, the electronic device may be triggered, by using the first operation, to display an object and an application icon, and the electronic device may also be triggered, by dragging an object in an interface to the fourth area of the display screen, to display an application icon, so that the object can be dragged to an area above the displayed application icon, thereby implementing object processing. For example, in the case of storage, the object can be quickly stored.

In another implementation of the first aspect, the sixth operation includes an eighth operation and a ninth operation, and that the electronic device receives a sixth operation of dragging a second object in the fifth interface to a fourth area of the display screen includes:
The electronic device receives the eighth operation of selecting the second object.

The electronic device displays a second control in the fifth interface in response to the eighth operation. Content of the second object is displayed on the second control.

The electronic device receives the ninth operation of dragging the second control to the fourth area.

Correspondingly, that the electronic device displays a sixth interface in response to the sixth operation includes:
In response to the ninth operation, the electronic device displays the sixth interface including the second control.

In this application, in a process of dragging an object, an object in an original interface is not deleted. Therefore, a control for an object may be set to be dragged. When the control for the object is dragged to an area above an application icon, it indicates that the object is stored in an application indicated by the application icon.

In another implementation of the first aspect, the icon of the first application in the sixth interface is displayed in a second area of the display screen, and the first object in the seventh interface is displayed in a first area of the display screen.

When the first operation is an operation of sliding leftward from a right edge of the screen, the fourth area is located on the right side of the display screen; and
when the first operation is an operation of sliding rightward from a left edge of the display screen, the fourth area is located on the left side of the display screen.

In another implementation of the first aspect, the seventh operation is a dynamic gesture operation continuous with the sixth operation, and the ninth operation is a dynamic gesture operation continuous with the eighth operation; and
the ninth operation is an operation of dragging the second control to the fourth area and displaying the second control in the fourth area for second duration.

In this application, to avoid a misoperation, the electronic device may be set to be triggered, only when the second control is dragged to the fourth area and displayed for sufficient duration, to display an application icon.

In another implementation of the first aspect, the sixth interface further includes the icon of the second application; and when the electronic device displays the sixth interface including the second control, the method further includes:

The electronic device receives a tenth operation of dragging the second control to an area in which the icon of the second application is located and releasing the second control, and the electronic device displays an eighth interface of the second application in response to the tenth operation. The eighth interface displays content associated with the second object.

In this application, the user may drag, in the second interface displaying both an object and an application icon, an object to an area above an icon of an application related to the object, to trigger the electronic device to display an interface that is of the application and that is associated with the object; and may also perform an operation in an interface that does not display an application icon and displays an object, to trigger the electronic device to display an application icon, and perform an operation of continuing to drag an object to the displayed application icon, to trigger the electronic device to display an interface that is of the application and that is associated with the object.

In another implementation of the first aspect, the second object and the first object are same objects located in different interfaces, content displayed in the eighth interface and the third interface is the same, and the tenth operation is a dynamic gesture operation continuous with the sixth operation.

In another implementation of the first aspect, before the electronic device receives the second operation of dragging the first object to the area in which the icon of the second application is located and releasing the first object, the second interface displayed by the electronic device further includes a third object; and when the electronic device displays the second interface including the third object, the method further includes:
The electronic device receives an eleventh operation of selecting the third object.

The electronic device displays a third control and an icon of a fourth application in the second interface in response to the eleventh operation. Content of the third object is displayed on the third control.

The electronic device receives a twelfth operation of dragging the third control to an area in which the icon of the fourth application is located and releasing the third control. The twelfth operation is a dynamic gesture operation continuous with the eleventh operation.

The electronic device displays a ninth interface of the fourth application in response to the twelfth operation. The ninth interface displays content associated with the third object.

In this application, the following setting may alternatively be performed: When the third object is selected, the icon of the fourth application corresponding to the third object is displayed in the second interface, and then the third object is dragged to an area above the icon of the fourth application, to trigger the fourth application to process the third object. This manner is also relatively simple and quick.

In another implementation of the first aspect, the electronic device includes a display screen, the icon of the fourth application is displayed in a second area of the display screen, and the third object in the second interface is displayed in a first area of the display screen.

In another implementation of the first aspect, the electronic device includes a display screen, the first operation includes a thirteenth operation and a fourteenth operation, and that an electronic device receives a first operation includes:
The electronic device receives the thirteenth operation of sliding leftward from a right edge of the display screen.

The electronic device displays a tenth interface in response to the thirteenth operation. The tenth interface displays a third image and the icon of the first application, and the third image is content of the first interface.

The electronic device receives the fourteenth operation of sliding leftward and performing a release. The fourteenth operation is continuous with the thirteenth operation.

Correspondingly, that the electronic device displays a second interface in response to the first operation includes:
The electronic device displays the second interface in response to the fourteenth operation.

In another implementation of the first aspect, when the electronic device displays the tenth interface, the method further includes:
The electronic device detects a release operation corresponding to the thirteenth operation.

The electronic device maintains display of the tenth interface in response to the release operation continuous with the thirteenth operation.

In this application, the first operation may be a continuous dynamic gesture operation, the tenth interface is displayed after the thirteenth operation, and the second interface is displayed after the fourteenth operation. When the tenth interface is displayed by using the thirteenth operation, if the user releases a finger, the electronic device may be triggered to maintain display of the tenth interface, and the user may perform some operations in the tenth interface. Therefore, diversified object processing manners are provided.

In another implementation of the first aspect, the electronic device includes the display screen, the third image is displayed in a fifth area of the display screen, and the icon of the first application in the tenth interface is displayed in a second area of the display screen; when the first operation is an operation of sliding leftward from the right edge of the display screen, the fifth area is located on the left side of the second area; and when the first operation is an operation of sliding rightward from a left edge of the screen, the fifth area is located on the right side of the second area.

In another implementation of the first aspect, the first object is a first file, the second application is a printing application, and the third interface is a printing setting interface.

In this application, file printing processing can be conveniently and quickly implemented.

In another implementation of the first aspect, the first object is a first file, the third application is an instant messaging application, and the fourth interface is an interface existing after the instant messaging application sends the first file.

In this application, a file can be conveniently and quickly sent.

According to a second aspect, an electronic device is provided. The electronic device includes a processor. The processor is configured to run a computer program stored in a memory, to implement the method according to any one of the implementations of the first aspect of this application.

According to a third aspect, a chip system is provided. The chip system includes a processor. The processor is coupled to a memory, and the processor executes a computer program stored in the memory, to implement the method according to any one of the implementations of the first aspect of this application.

According to a fourth aspect, a computer-readable storage medium is provided. The computer-readable storage medium stores a computer program, and when the computer program is executed by one or more processors, the method according to any one of the implementations of the first aspect of this application is implemented.

According to a fifth aspect, an embodiment of this application provides a computer program product. When the computer program product runs on a device, the device is enabled to perform the method according to any one of the implementations of the first aspect of this application.

It may be understood that for beneficial effects of the second aspect to the fifth aspect, reference may be made to the related descriptions in the first aspect. Details are not described herein again.

### BRIEF DESCRIPTION OF DRAWINGS

FIG. 1 is a schematic diagram of a hardware structure of an electronic device to which an object processing method is applied according to an embodiment of this application;
FIG. 2A to FIG. 2D are a conceptual diagram of smart space according to an embodiment of this application;
FIG. 3A to FIG. 3D are a conceptual diagram of another type of smart space according to an embodiment of this application;
FIG. 4 is a conceptual diagram of a sidebar in smart space according to an embodiment of this application;
FIG. 5A to FIG. 5D are a schematic interface diagram of storing a file in smart space according to an embodiment of this application;
FIG. 6A to FIG. 6D are a schematic interface diagram of storing information in smart space according to an embodiment of this application;
FIG. 7A to FIG. 7D are a schematic interface diagram of dragging a file stored in smart space to a left-side interface for processing according to an embodiment of this application;
FIG. 8A to FIG. 8E are a schematic interface diagram of dragging information stored in smart space to a left-side interface for processing according to an embodiment of this application;
FIG. 9A to FIG. 9C are a schematic diagram of setting an application interface displayed in smart space according to an embodiment of this application;
FIG. 10A to FIG. 10D are a schematic interface diagram of dragging a file stored in smart space to a left-side interface for processing according to an embodiment of this application;
FIG. 11A to FIG. 11C are a schematic interface diagram of dragging a file stored in smart space to a right-side recommended service for processing according to an embodiment of this application;
FIG. 12A to FIG. 12E are another schematic interface diagram of dragging information in smart space to a right-side recommended service for processing according to an embodiment of this application;
FIG. 13A to FIG. 13C are a schematic interface diagram of dragging an object in a current interface to a recommended service in smart space for processing according to an embodiment of this application;
FIG. 14A to FIG. 14C are another schematic interface diagram of dragging an object in a current interface to a recommended service in smart space for processing according to an embodiment of this application;
FIG. 15A to FIG. 15D are another schematic interface diagram of dragging an object in a current interface to a recommended service in smart space for processing according to an embodiment of this application;
FIG. 16A to FIG. 16F are a schematic interface diagram of a display manner of a service in a sidebar according to an embodiment of this application;
FIG. 17 is a schematic diagram of an interface displayed after smart space is fully open according to an embodiment of this application;
FIG. 18A to FIG. 18D are a schematic interface diagram of a display manner of an application in a sidebar and a current interface according to an embodiment of this application;
FIG. 19A to FIG. 19F are a schematic interface diagram of adding an application icon to a sidebar according to an embodiment of this application; and
FIG. 20 is a schematic flowchart of an object processing method according to an embodiment of this application.

### DESCRIPTION OF EMBODIMENTS

In the following descriptions, for the purpose of description instead of limitation, specific details such as a specific system structure and a technology are proposed, to provide a thorough understanding of embodiments of this application. However, persons skilled in the art should understand that this application may also be implemented in another embodiment without these specific details.

It should be understood that when being used in this specification and the appended claims of this application, the term "include" indicates presence of a described feature, entirety, step, operation, element, and/or component, but does not rule out presence or addition of one or more other features, entireties, steps, operations, elements, components, and/or sets thereof.

It should be further understood that in embodiments of this application, "one or more" means one, two, or more than two, and "and/or" describes an association relationship between associated objects and indicates that three relationships may exist. For example, A and/or B may indicate the following cases: Only A exists, both A and B exist, and only B exists, where A and B may be singular or plural. The character "/" usually indicates an "or" relationship between associated objects.

In addition, in the descriptions of this specification and the appended claims of this application, the terms such as "first", "second", "third", and "fourth" are used only to distinguish between descriptions, and should not be understood as an indication or implication of relative importance.

Referring to "one embodiment", "some embodiments", or the like that is described in this specification of this application means that specific features, structures, or characteristics described with reference to one or more embodiments of this application are included in the one or more embodiments. Therefore, statements such as "in one embodiment", "in some embodiments", "in some other embodiments" that appear in different parts of this specification do not necessarily refer to same embodiments, but mean "one or more but not all embodiments", unless otherwise specifically emphasized in other manners. The terms "include", "comprise", "have", and variants thereof all mean "include but are not limited to", unless otherwise specifically emphasized in other manners.

An object processing method provided in embodiments of this application is applicable to an electronic device. The electronic device may be a tablet computer, a mobile phone, a wearable device, a notebook computer, an ultra-mobile personal computer (ultra-mobile personal computer, UMPC), a netbook, a personal digital assistant (personal digital assistant, PDA), or another electronic device. A specific type of the electronic device is not limited in embodiments of this application.

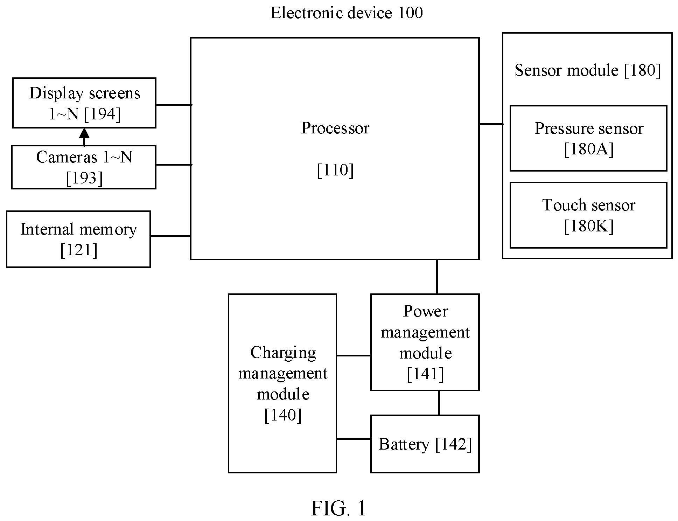

FIG. 1 is a schematic diagram of a structure of an electronic device. The electronic device 100 may include a processor 110, an internal memory 121, a charging management module 140, a power management module 141, a battery 142, a sensor module 180, a camera 193, a display screen 194, and the like. The sensor module 180 may include a pressure sensor 180A, a touch sensor 180K, and the like.

It may be understood that the structure illustrated in this embodiment of this application constitutes no specific limitation on the electronic device 100. In some other embodiments of this application, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a coprocessor (sensor coprocessor, SCP), a baseband processor, and/or a neural-network processing unit (neural-network processing unit, NPU). Different processing units may be independent devices, or may be integrated into one or more processors. A memory may be further disposed in the processor 110 to store instructions and data. The internal memory 121 may be configured to store computer-executable program code, and the executable program code includes instructions. The processor 110 runs the instructions stored in the internal memory 121, to perform various function applications and data processing of the electronic device 100.

The charging management module 140 is configured to receive a charging input from a charger. The charger may be a wireless charger or a wired charger.

The power management module 141 is configured to connect to the battery 142, the charging management module 140, and the processor 110. The power management module 141 receives an input from the battery 142 and/or the charging management module 140, to supply power to the processor 110, the internal memory 121, the display screen 194, the camera 193, and the like.

The pressure sensor 180A is configured to sense a pressure signal, and may convert the pressure signal into an electrical signal. In some embodiments, the pressure sensor 180A may be disposed on the display screen 194. When a touch operation is performed on the display screen 194, the electronic device 100 detects intensity of the touch operation by using the pressure sensor 180A.

The touch sensor 180K is also referred to as a "touch panel". The touch sensor 180K may be disposed on the display screen 194. The touch sensor 180K and the display screen 194 form a touchscreen, also referred to as a "touch control screen". The touch sensor 180K is configured to detect a touch operation performed on or near the touch sensor.

The electronic device 100 implements a display function by using the GPU, the display screen 194, the application processor, and the like. The GPU is a microprocessor for image processing, and is connected to the display screen 194 and the application processor. The GPU is configured to perform mathematical and geometric computing for graphics rendering. The processor 110 may include one or more GPUs that execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a Miniled, a MicroLed, a Micro OLED, a quantum dot light emitting diode (quantum dot light emitting diodes, QLED), or the like. In some embodiments, the electronic device 100 may include one or N display screens 194, where N is a positive integer greater than 1.

The camera 193 is configured to capture a still image or a video. An optical image of an object is generated through a lens and is projected onto a photosensitive element. The photosensitive element may be a charge coupled device (charge coupled device, CCD) or a complementary metal-oxide-semiconductor (complementary metal-oxide-semiconductor, CMOS) phototransistor. In some embodiments, the electronic device 100 may include one or N cameras 193, where N is a positive integer greater than 1.

In embodiments of this application, a specific structure of an execution body of an object processing method is not specially limited, provided that code in which the object processing method provided in embodiments of this application is recorded can be run to perform communication according to the object processing method provided in embodiments of this application. For example, the execution body of the object processing method provided in embodiments of this application may be a functional module that is in an electronic device and that can invoke a program and execute the program, or may be a communication apparatus, for example, a chip, applied to an electronic device.

As electronic devices provide increasing functions, people increasingly rely on the electronic devices. A user may use an electronic device to perform activities related to work, life, and the like. For example, the user may perform a related operation (for example, document printing or picture forwarding) on a file (for example, a document, a video, audio, or a picture) stored in the electronic device or information (for example, a text, a link, or an image) displayed by the electronic device.

In an example of performing a printing operation on a document, when the user wants to print a document sent by a friend a few days ago, the user first finds an instant messaging application on a system desktop of the electronic device, taps an icon of the instant messaging application to open the instant messaging application, finds a chat entry of the friend in chat entries displayed in an interface of the instant messaging application, taps the chat entry of the friend to open an interface for chatting with the friend, and then finds a target document in the chatting interface. Then the user taps the target document to open the target document by using document editing software, and finds a print button in an interface of the target document displayed on the document editing software, to open a printing application, so that the target document can be printed by using the printing application. It may be understood that the user needs to perform operations of a plurality of steps to implement the process.

Even if the user has stored the target document in the electronic device when receiving the target document, when the user needs to print the target document after a period of time, the user needs to find a Files application on the system desktop of the electronic device, tap an icon of the Files application to open the Files application, and find the target document in file entries displayed in an interface of the Files application. Then the user taps the target document to open the target document by using the document editing software, and finds the print button in the interface of the target document displayed on the document editing software, to open the printing application, so that the target document can be printed by using the printing application. It may be understood that the user also needs to perform operations of a plurality of steps to implement the process.

Certainly, the foregoing example uses only the printing operation on the document as an example. In an actual application, for various operations on a file and information, the user needs to perform relatively cumbersome operations. Therefore, convenience of each function provided by the electronic device becomes particularly important.

Embodiments of this application provide an object processing method. The method can provide a simple and quick manner to help a user find a target object (the target object includes a file and information in the foregoing example) in an electronic device, and after the target object is found, provide a simple and quick manner to help the user perform a related operation on the target object by using the electronic device. In addition, a simpler and quicker manner is further provided to help the user perform, in an interface including the target object, a related operation on the target object by using the electronic device.

The following describes a specific implementation solution of the object processing method provided in embodiments of this application.

An embodiment of this application provides virtual space in an electronic device. The virtual space may be denoted as smart space, which may also be denoted as magic space. Applications such as Global Favorites and Personal Folder may be used in the smart space. Global Favorites and Personal Folder may store a file and information in the foregoing example. Correspondingly, the smart space may further provide an operation service corresponding to the file and the information, for example, printing, forwarding, or price comparison on identified products.

Global Favorites and Personal Folder are used only as examples. In an actual application, an application used to store a file and information in the smart space may have different names, for example, may be named Transfer Station or Notes. Personal Folder may also have a different name based on a setting of a user. For example, the name of Personal Folder may be changed to "Folder", "Important Files", or "Private Files". Certainly, one or more applications for storing a file and information may exist in the smart space.

An example in which the smart space may provide the Global Favorites and Personal Folder applications is used in this embodiment of this application. Personal Folder may store a file, for example, a document, a video, audio, or a picture. Global Favorites may store information, for example, a text, a link, or image information. Certainly, in an actual application, a file may also be stored in Global Favorites. A type of an object specifically stored in an application that is in the smart space and that is used to store an object is not limited in this embodiment of this application.

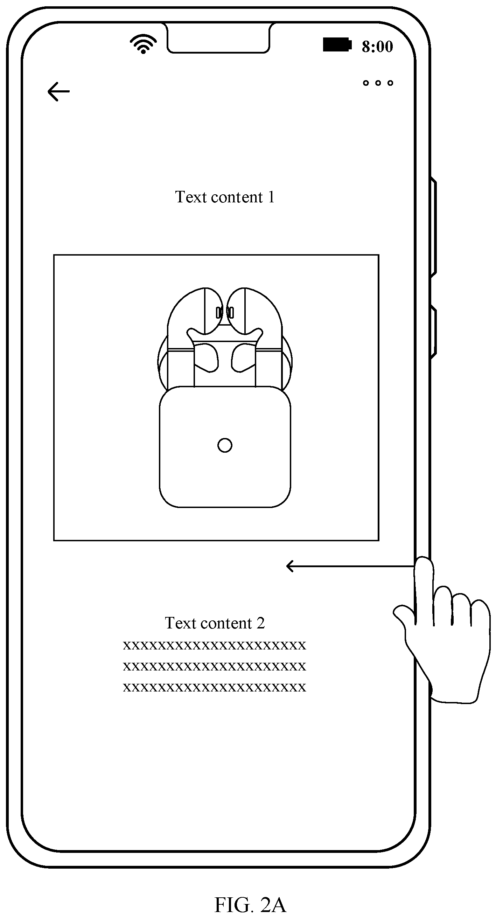

The following first describes a conceptual diagram of an interface on the basis of which the object processing method provided in embodiments of this application is implemented. Referring to FIG. 2A to FIG. 2D, FIG. 2A to FIG. 2D are a conceptual diagram of an interface corresponding to smart space according to an embodiment of this application.

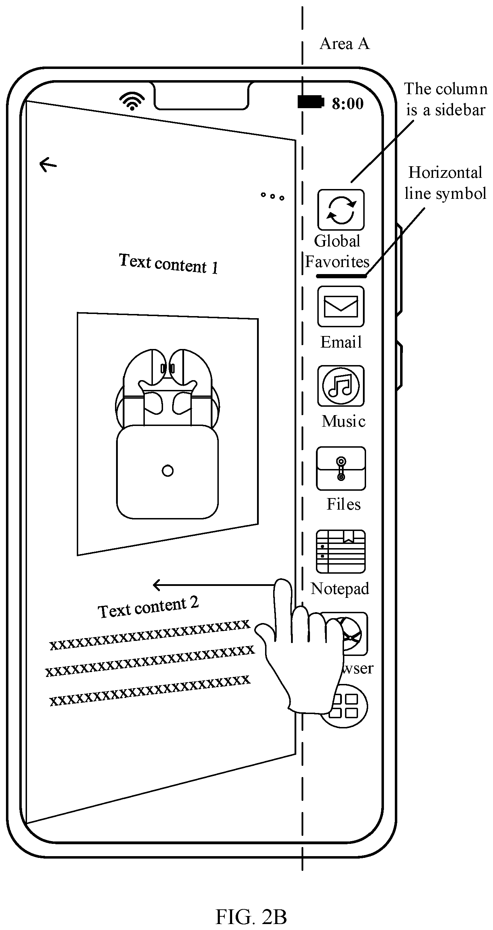

As shown in FIG. 2A, a display screen of an electronic device displays any interface (which may be denoted as an interface 1, and may be a system desktop, an interface of an application, or the like). When the electronic device displays the any interface, a finger of the user starts to slide leftward from the rightmost side of the display screen of the electronic device to open the smart space. FIG. 2B to FIG. 2D show a process of opening the smart space. In an actual application, the following setting may alternatively be performed based on a case: The smart space cannot be opened when the electronic device displays a specific interface, or the smart space can be opened only when a specific interface is displayed.

In this embodiment of this application, an operation of starting to slide from the rightmost side of the display screen to the left side is used as an example of a gesture operation of opening the smart space. In an actual application, a gesture operation of another type, for example, an operation of starting to slide from the leftmost side of the display screen to the right side, may alternatively be used as the gesture operation of opening the smart space.

When the finger of the user slides from the rightmost side of the display screen to the left side in the interface shown in FIG. 2A, the electronic device is triggered to display an interface shown in FIG. 2B.

As shown in FIG. 2B, as the finger of the user slides to the left side on the display screen, the interface 1 displayed by the electronic device also starts to slide to the left side. As the interface 1 slides to the left side, the smart space is gradually opened, and a sidebar in the smart space is displayed on the right side of the display screen.

The interface 1 may be understood as a door of the smart space. As the door is opened, some shortcut applications and an application (for example, Global Favorites) that is provided by the smart space and that is used to store an object are displayed in the sidebar. After the interface 1 is partially pushed, the electronic device displays the sidebar in a right-side area (for example, an area A in the figure) in the smart space. The sidebar may include one or more application icons, for example, an icon of Global Favorites in the foregoing example, and may further display icons of some shortcut applications, for example, an icon of Email, an icon of Music, and an icon of Files.

To improve user experience, the interface 1 may be considered as a door in real space. As the door is pushed, from a perspective of the user, a left-side edge of the interface 1 is displayed on the leftmost side of the display screen, and the interface 1 is visually deformed as the door. Therefore, as the finger of the user slides to the left side on the screen, the interface 1 is deformed, as if the door of the smart space is opened.

Certainly, FIG. 2B may not show the interface 1 or a deformed interface 1, but show a snapshot of the interface 1 or an image (the image is denoted as a deformed image of the interface 1) obtained after the snapshot of the interface 1 is deformed. A form of the interface 1 displayed in a process of opening the magic space is not limited.

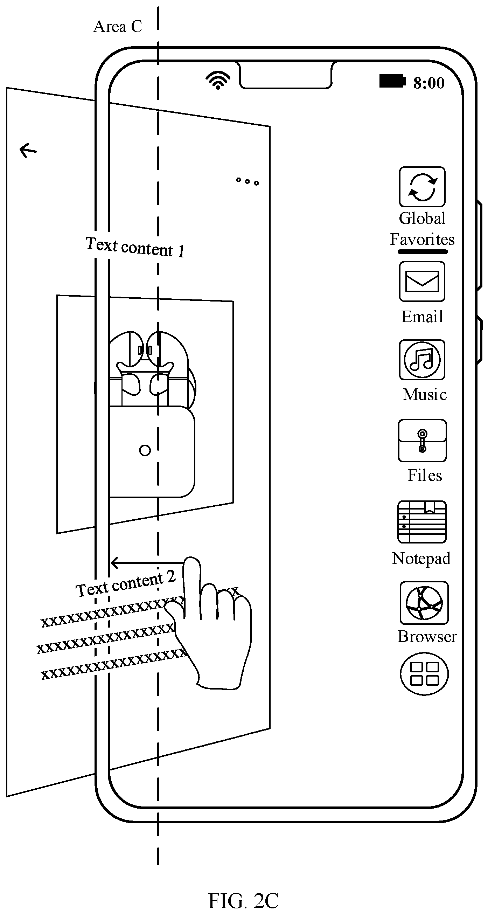

When the finger of the user is not lifted in the interface shown in FIG. 2B and continues sliding to the left side, the electronic device is triggered to display an interface shown in FIG. 2C.

As shown in FIG. 2C, as the user continues sliding to the left side of the display screen without lifting the finger, the deformed interface 1 (or the deformed image of the interface 1) continues being pushed to the left side. From a perspective of stereo space, the interface 1 (or the deformed image of the interface 1) is pushed to left-side space. Because space of the display screen is limited, content of a partial area of the deformed interface 1 (or the deformed image of the interface 1) is displayed on the display screen. In the figure, the interface 1 (or the deformed image of the interface 1) on the left side of the display screen is a conceptual example, and does not indicate that content in an area outside the display screen can be seen from a viewpoint of the user.

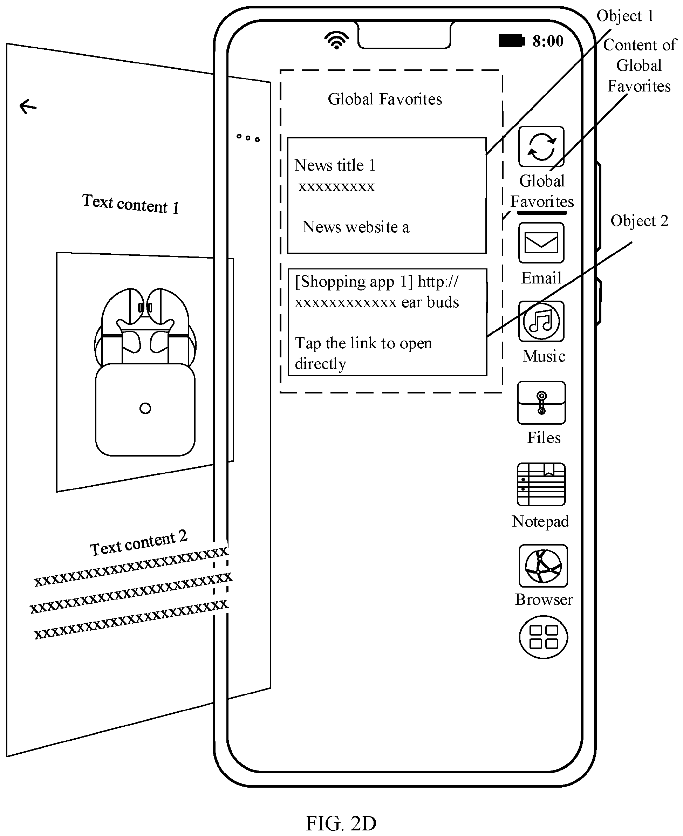

When the finger of the user is not lifted in the interface shown in FIG. 2C and continues sliding to the left side, the electronic device is triggered to display an interface shown in FIG. 2D.

As shown in FIG. 2D, when the finger of the user slides to a left-side area (which may be specifically set to an area of a specific length close to the leftmost side of the display screen, for example, an area C) of the display screen, the deformed interface 1 (or the deformed image of the interface 1) is pushed so that only a relatively small area on the rightmost side of the interface 1 is displayed on the display screen. In this case, the smart space is fully opened, and a central area (an area between the area A and the area C) of content currently displayed on the display screen displays objects stored in or added to favorites in the smart space, for example, content of Global Favorites in a dashed-line box shown in FIG. 2D. Two objects stored in or added to Global Favorites are displayed in Global Favorites, and are an object 1 and an object 2 shown in FIG. 2D. The objects stored in or added to Global Favorites may be displayed in a form of cards, or the objects stored in or added to Global Favorites may be displayed in a form of entries. A display form of content displayed in the central area of the smart space is not limited in this application.

It may be understood from FIG. 2A to FIG. 2D that in this embodiment of this application, only a one-step operation is required to find an object stored in Global Favorites. There is no need to return to the system desktop to search an instant messaging application for the object by using a plurality of steps, and there is no need to return to the system desktop to search Files for the object by using a plurality of steps.

In subsequent embodiments of this application, during or after opening of the smart space, the interface 1 or the deformed interface 1 is used as an example of content pushed to the left side, and does not indicate that the deformed image of the interface 1 or the screenshot image of the interface 1 cannot be used as the content pushed to the left side for display.

In the foregoing example, the process of opening the smart space is divided into a plurality of stages: The interface 1 is pushed and deformed and the sidebar is displayed, the deformed interface 1 continues being pushed through translation, and the deformed interface 1 is pushed to the leftmost side through translation and content of Global Favorites is displayed. Therefore, the display screen may be partitioned, so that different stages of the continuous dynamic gesture in FIG. 2A to FIG. 2D correspond to different stages of opening the smart space. For example, the display screen is divided into the area A, an area B, and the area C starting from the rightmost side. The area between the area A and the area C is the area B. When the electronic device detects that the finger of the user starts to slide from the rightmost side into the area B through the area A, an interface displayed by the electronic device changes from FIG. 2A to FIG. 2B. When the finger of the user passes through the area A and slides in the area B, the interface displayed by the electronic device changes from FIG. 2B to FIG. 2C. It should be noted that FIG. 2C is only an example in a process in which the finger of the user slides in the area B. When the finger of the user passes through the area A and the area B and slides into the area C, the interface displayed by the electronic device changes to FIG. 2D. The area A and the area C are marked in FIG. 2B and FIG. 2C. In the foregoing example, the area A, the area B, and the area C are only examples. In an actual application, an adjustment may be performed based on an actual case. In addition, it may also be understood that the sidebar is displayed in the area A, content of Global Favorites is displayed in the area B, and a partial area of the image of the interface 1 is displayed in the area C. Certainly, in an actual application, division of three areas corresponding to gesture operations of the user and division of three areas for displaying content in the smart space may alternatively be different.

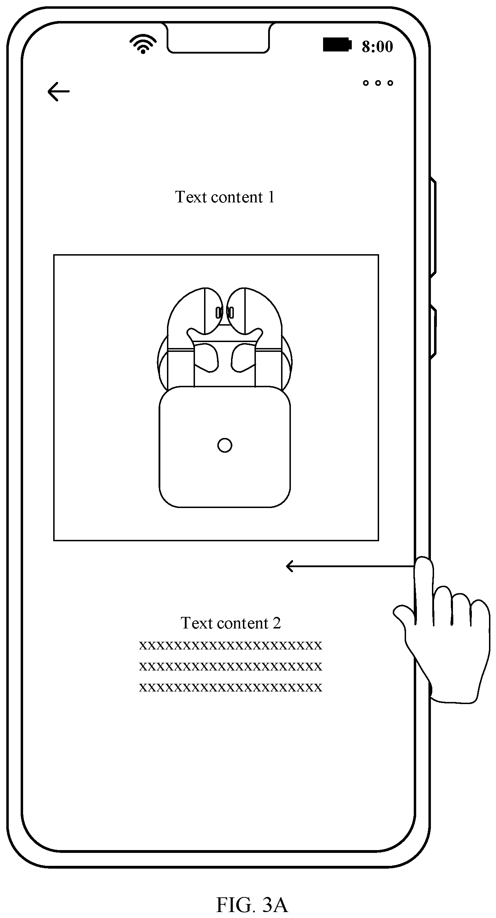

In another embodiment of this application, the smart space may alternatively be opened in a manner shown in FIG. 3A to FIG. 3D.

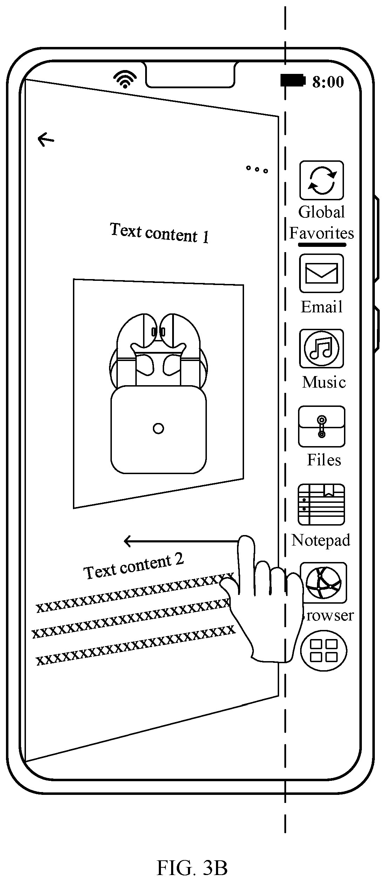

FIG. 3A and FIG. 3B are the same as FIG. 2A and FIG. 2B. Details are not described herein again.

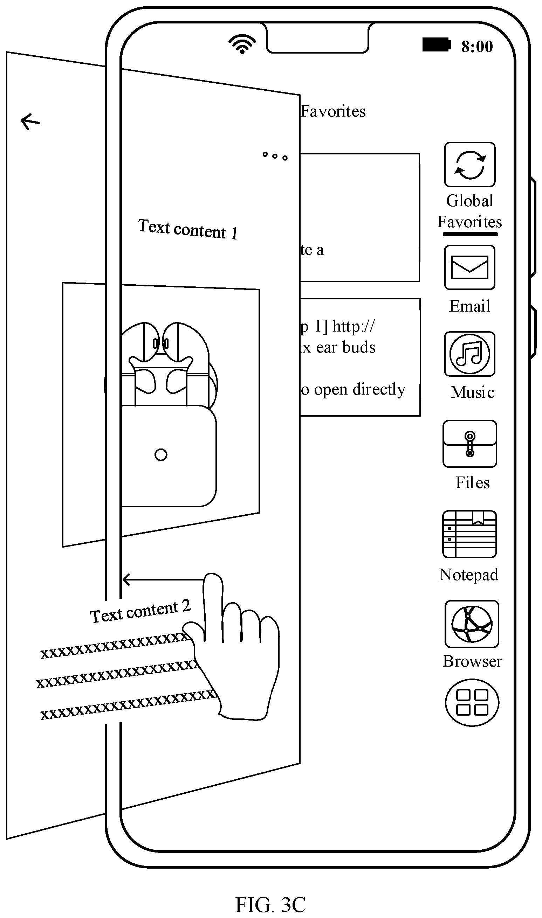

As shown in FIG. 3C, when the finger of the user passes through the area A and slides in the area B, the deformed interface 1 starts to slide to the left side as the finger of the user slides. Because the interface 1 may be considered as the door of the smart space, the following setting may alternatively be performed: Content of Global Favorites displayed in the smart space is displayed below the deformed interface 1. As the deformed interface 1 is slowly pushed to the left side, content of Global Favorites that is blocked by the deformed interface 1 is gradually displayed. When the deformed interface 1 is partially pushed, an area that is of the content of Global Favorites in the smart space and that is not blocked by the interface 1 is displayed.

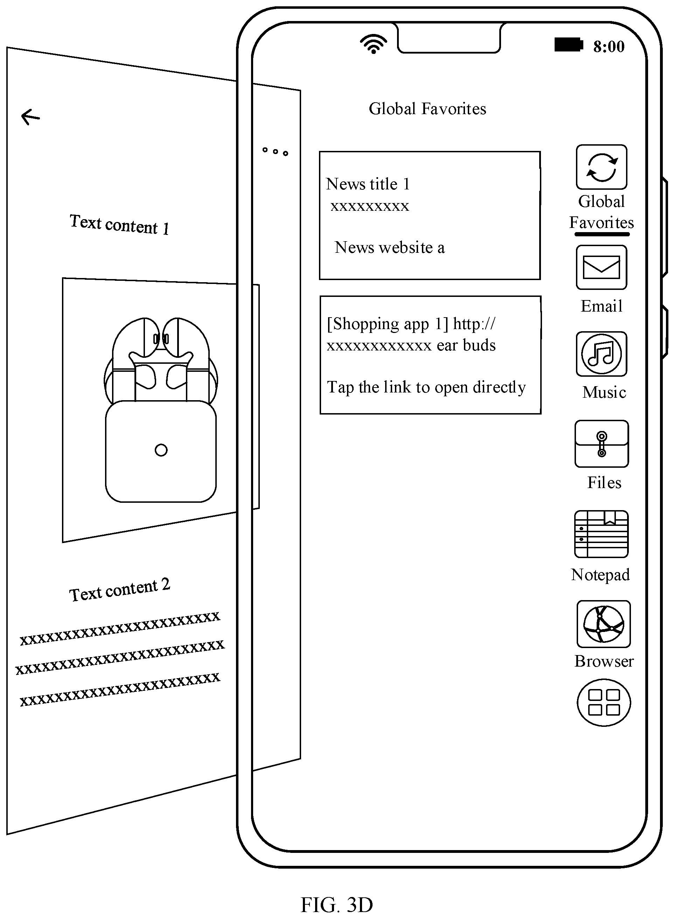

As shown in FIG. 3D, as the finger of the user slides into the area C on the display screen, the deformed interface 1 displays only the rightmost area on the display screen, and the content of Global Favorites in the smart space is displayed in a central area of content currently displayed on the display screen.

Whether the interface change process shown in FIG. 2A to FIG. 2D or the interface change process shown in FIG. 3A to FIG. 3D is used during specific implementation is not limited in this embodiment of this application. In subsequent embodiments, the interface change process shown in FIG. 2A to FIG. 2D is used as an example.

The following uses FIG. 2A to FIG. 2D as an example to describe an interface in the smart space in detail.

The interface 1 in FIG. 2A to FIG. 2D is considered as the door of the smart space, and pushed to the left side, and only a partial area thereof is displayed. The interface 1 may be any interface (which may be any interface other than the leftmost home screen). When the electronic device displays the any interface, the user can open the smart space by performing a gesture operation of opening the smart space. The leftmost home screen is a leftmost screen in system screens displayed by the electronic device. For example, when the electronic device displays a system main screen, the leftmost screen that the user triggers, by using a gesture operation of sliding rightward, the electronic device to display is the leftmost home screen. Generally, the leftmost home screen can provide shortcut entries to some applications, notification messages, and the like.

Content of the application that is in the smart space and that is used to store an object or add an object to favorites, for example, content of Global Favorites displayed in FIG. 2D, is displayed in the central area (the area between the area A and the area C in FIG. 2A to FIG. 2D) of the smart space. A boundary line may or may not exist for the content of Global Favorites. Content displayed in the area includes an object stored in or added to Global Favorites, for example, the object 1 and the object 2 shown in FIG. 2D. In an actual application, a display form of the object may be set based on an actual case. For example, an object stored in the application in the smart space is displayed in a form of a card, or an object stored in the application in the smart space may be displayed in a form of an entry.

The sidebar is displayed in the right-side area of the smart space (for example, the area A shown in FIG. 2B). The sidebar mainly displays icons of some applications (or services).

In this embodiment of this application, the service is a function provided by the application, and the application is a form of the service carried in the electronic device. Therefore, in subsequent embodiments of this application, the application is used for description.

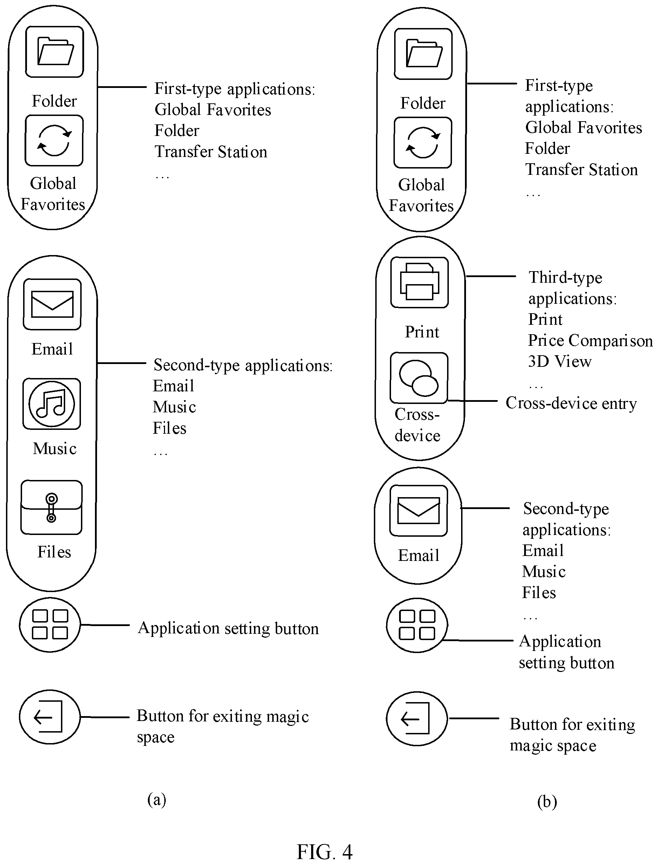

Referring to FIG. 4, FIG. 4 is a display form of the sidebar according to an embodiment of this application.

Referring to (a) in FIG. 4, (a) in FIG. 4 is a conceptual diagram of the sidebar in a case in which no object is selected. The sidebar may display icons of a plurality of types of applications: an icon of a first-type application, an icon of a second-type application, an application setting button, and an exit button.

Referring to (b) in FIG. 4, (b) in FIG. 4 is a conceptual diagram of the sidebar in a case in which an object is selected. An icon of a third-type application is added to the sidebar shown in (a) in FIG. 4. For differences between different types of applications, reference may be made to Table 1.

**Table 1 Differences between the first-type application, the second-type application, and the third-type application displayed in the sidebar**

| Feature | First-type application | Second-type application | Third-type application |
|---|---|---|---|
| Can the application be displayed in the central area of the interface of the smart space | Yes | No | Yes |
| Does the application occur after an object is selected and is the application related to the selected object | No | No | Yes |

The first-type application is an application that may be displayed in the central area of the smart space. When no object is selected, the first-type application is displayed in the sidebar, and when an object is selected, the first-type application is also displayed in the sidebar. The first-type application may store an object or add an object to favorites, and the first-type application may include one or more applications, for example, Global Favorites, Folder, and Transfer Station. When no adding or deleting operation is performed on the first-type application displayed in the sidebar, the displayed first-type application remains the same regardless of whether an object is selected or no object is selected.

The second-type application is an application that may be added or deleted by the user, and the second-type application cannot be displayed in the central area of the smart space. The second-type application may include one or more applications, for example, Email, Music, and Files. In an actual application, due to limited space, some or all of second-type applications are displayed in the sidebar. Some second-type applications that are not displayed may be displayed by using a sliding operation in an area corresponding to the second-type applications.

The third-type application occurs when an object is selected and is related to a type of the selected object, and may be displayed in the central area of the smart space. After the selected object is dragged to an area above an icon of the third-type application and the finger is lifted, the electronic device is triggered to display an interface that is of the third-type application and that is related to the selected object. The third-type application may display, in the central area of the interface of the smart space, the interface related to the selected object.

This embodiment of this application provides, by using Table 2, a correspondence between some different types of objects and third-type applications displayed in the sidebar.

**Table 2 Correspondence between an object and a third-type application**

| Object type | Semantic information | Third-type application |
|---|---|---|
| Text | Address information | Navigation and taxi hailing |
| | Movie/Performance information | Ticket purchase |
| | Product name/Shopping token information | Shopping |
| | Food name | Catering and food delivery |
| | \ | Printing and transmission |
| Picture | \ | Picture editing |
| | Antique | 3D view |
| | Movie/Performance information | Ticket purchase |
| | Product information | Price comparison and printing |
| | Food name | Catering and food delivery |
| | Application ID | Specific application |
| Video | \ | Video editing Short video social media |
| Document | \ | Printing Transmission |
| Hyperlink | \ | Browser |

In an actual application, third-type applications that are different from those in Table 2 may also be set for different types of objects, and examples are not provided in this application.

Due to limited space of the sidebar, when an object is selected, some originally displayed icons of second-type applications may be hidden when the sidebar displays the third-type application. For details, reference may be made to third-type applications shown in (a) in FIG. 4, including Email, Music, and Files. After an object is selected, for details, reference may be made to a third-type application shown in (b) in FIG. 4, including Email, where Music and Files are hidden. Certainly, the user may slide in an area in which an icon of the third-type application is located, so that hidden Music or Files is displayed.

The sidebar may further display the application setting button as a setting entry of an application in the smart space, and an application and a shortcut application in the smart space may be added or deleted by using the setting entry.

The smart space may be closed by using the exit button. For example, the user taps the exit button, and the electronic device displays an interface displayed before the smart space is opened. Certainly, during specific implementation, after the smart space is opened, the smart space may alternatively be closed by using a gesture operation of sliding rightward or a gesture operation of sliding leftward.

Due to limited space, the sidebar can display only some of the icons listed above. For example, after the smart space is opened, the sidebar displays the icon of the first-type application, the icon of the second-type application, and the application setting button, and no longer displays the exit button.

For ease of distinguishing, the icon of the first-type application and the icon of the third-type application may be spaced apart by using a "horizontal line" symbol therebetween. Reference may be made to a "horizontal line" symbol between Global Favorites and Email in FIG. 2A to FIG. 2D. Similarly, the icon of the third-type application and the icon of the second-type application may also be spaced apart by using a "horizontal line" symbol therebetween. For details, reference may be made to a display manner in an interface corresponding to subsequent embodiments. Certainly, icons of different types of applications may alternatively be spaced apart by using another form of symbol.

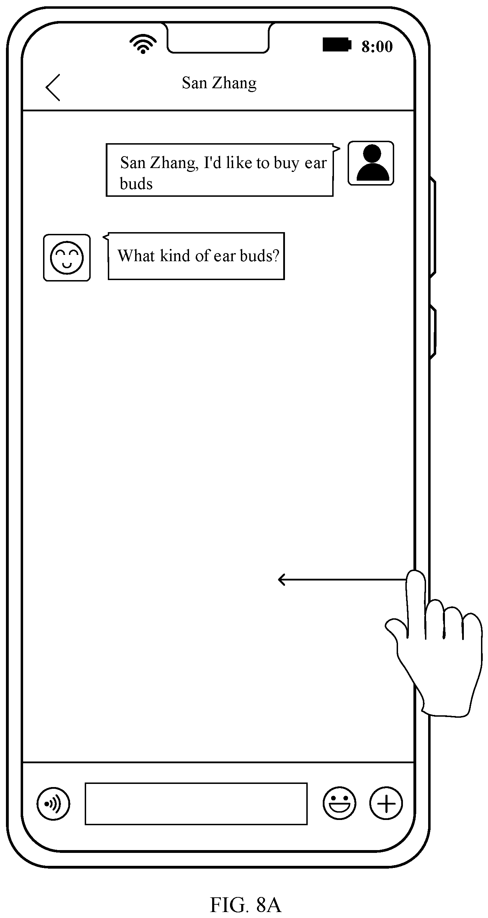

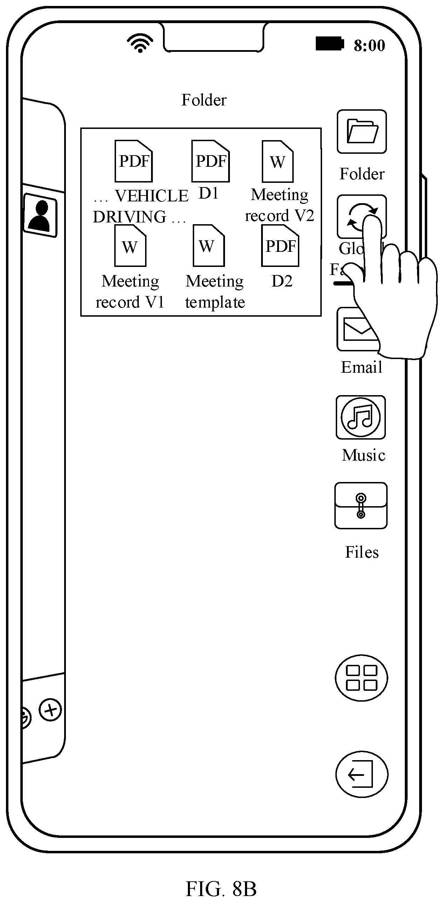

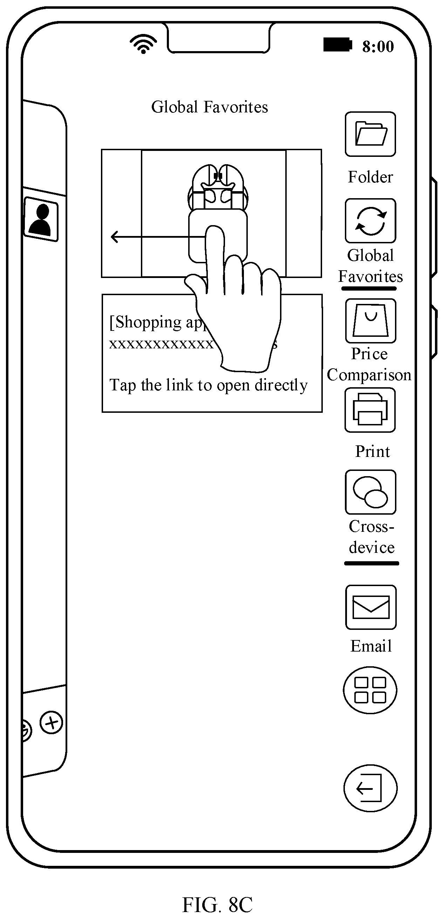

(a) in FIG. 4 and (b) in FIG. 4 are used to distinguish between different application types and some icons. In an actual application, for specific display forms of the sidebar in the case in which no object is selected and in the case in which an object is selected, reference may be made to a subsequent sidebar shown in FIG. 8B and a subsequent sidebar shown in FIG. 8C.

As described above, an object is stored in or added to favorites in the smart space. After the smart space is opened, a related operation may be performed on the object stored in or added to favorites in the smart space. The following first describes how to store an object in or add an object to favorites in the smart space.

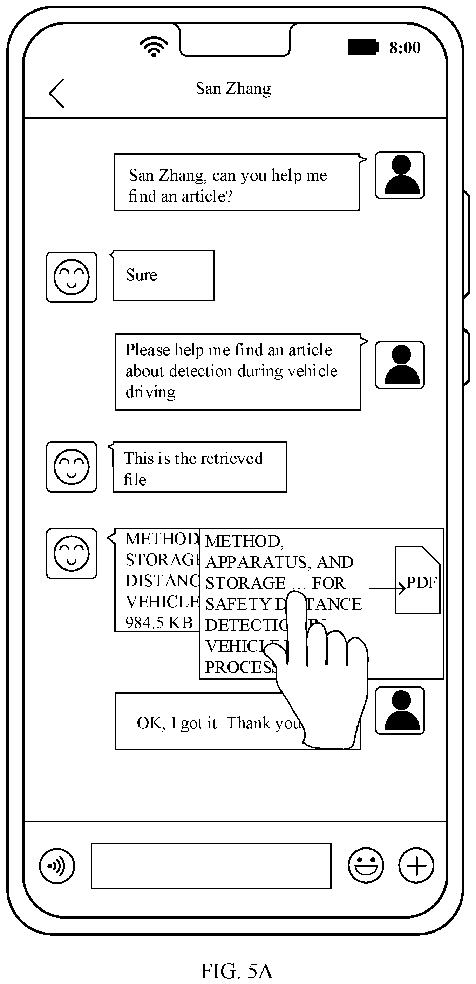

Referring to FIG. 5A to FIG. 5D, FIG. 5A to FIG. 5D show an example in which a file in a chatting interface of the instant messaging application is added to the smart space for storage according to an embodiment of this application. In this example, first-type applications for storing an object or adding an object to favorites are, for example, Folder and Global Favorites.

As shown in FIG. 5A, in the chatting interface (the interface is denoted as an interface 2) of the instant messaging application, a friend "San Zhang" sends a file "... IN VEHICLE DRIVING PROCESS". The user may select the file by touching and holding the file in an area in which the file is displayed, and drag the file to a right-side area.

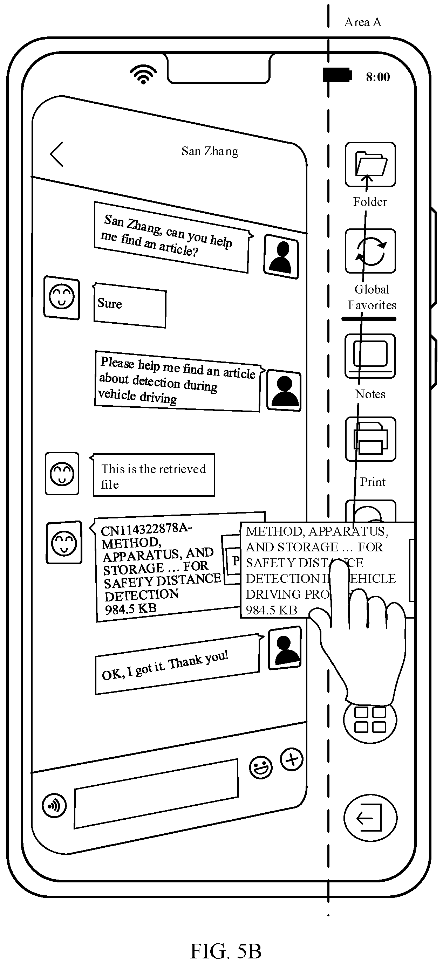

After the file is selected through touching and holding, the file is switched to a floating state, the floating-state file is used as a floating control, and the finger of the user drags the file to the right side on the display screen. When the file is dragged to the area A, the electronic device displays an interface shown in FIG. 5B. Certainly, in an actual application, the area may alternatively be different from the area A.

As shown in FIG. 5B, when the finger of the user drags the floating-state file to the right-side area A, the door of the smart space is triggered to be opened, and the interface 2 is considered as the door of the smart space, and is partially opened and is visually deformed. Because the interface 2 is partially opened, the sidebar is displayed in an area that is in the smart space and that is not blocked by the interface 2. In this case, the sidebar displays the first-type applications: Folder and Global Favorites, also displays third-type applications (in this case, objects are selected, and therefore the sidebar displays third-type applications corresponding to the selected objects): Notes, Print, and Cross-device, also displays a second-type application: Email, and also displays the setting button and the exit button. The user continues to drag the selected file to Folder in the sidebar, to store the selected file in Folder in the smart space, so that some related operations can be subsequently implemented on the file.

During specific implementation, the gesture in this example is a continuous dynamic gesture. To be specific, the finger of the user touches and holds the file in the interface 2, then drags the file to the right-side area A without being lifted, and continues dragging the file to Folder in the sidebar without being lifted. Certainly, another gesture operation may alternatively be set, based on a case, to place the file in the smart space, and examples are not provided in this embodiment of this application.

Certainly, in an actual application, the following setting may be performed: After the user selects any object by using the touching and holding gesture operation, the object is switched to a floating state, and the door of the smart space may also be opened.

The following setting may alternatively be performed: After the user selects any object by using the touching and holding gesture operation, the object is switched to a floating state, and the door of the smart space is not opened temporarily, but is opened after a dragging operation starts to be performed on the floating-state object.

Certainly, the following setting may alternatively be performed: After the user selects any object (the object is switched to a floating state) by using the touching and holding gesture operation, drags the floating-state object to the right-side area A, and holds the object for specific duration (for example, 600 ms), the door of the smart space is opened.

The setting of dragging an object to the area A and holding the object for specific duration can avoid the following case: When a selection gesture or a dragging gesture performed by the user on an object is set in the electronic device to be used to perform another operation, the electronic device detects that the gesture is used to perform an operation of opening the smart space but cannot be used to perform the another operation corresponding to the selection gesture or the dragging gesture, or is used to perform the another operation corresponding to the selection gesture or the dragging gesture but cannot be used to open the smart space.

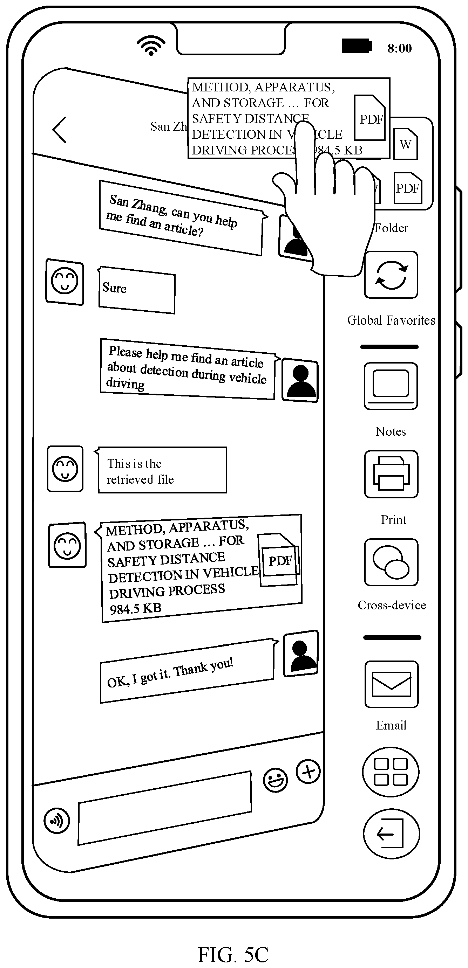

As shown in FIG. 5C, after the finger of the user drags the file to an area above an icon of Folder in the sidebar, the icon of Folder undergoes animation, and changes to another icon. Specifically, an icon of Folder in FIG. 5B and the icon of Folder in FIG. 5C may be compared. Certainly, in an actual application, after the finger of the user drags the file to an area corresponding to the icon of Folder in the sidebar, the icon of Folder may not undergo animation, and remains in an original icon state.

In a process in which the finger of the user drags the file to Folder, the following setting may be performed: As the file moves to the right side, an illustration of the file becomes smaller accordingly. This setting avoids the following case: Because the illustration of the file is excessively large, and is located above two icons, the electronic device cannot determine an application in which the file is to be stored.

After the finger of the user drags the file to an area above the icon of Folder in the sidebar, the user may lift the finger, to trigger the electronic device to store the file in or add the file to favorites in Folder.

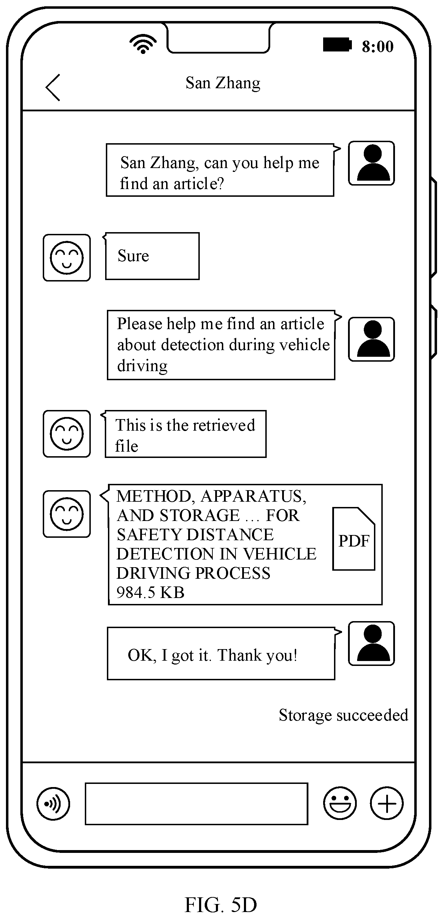

After the finger of the user is lifted from the display screen, the electronic device displays an interface shown in FIG. 5D.

As shown in FIG. 5D, the electronic device displays the interface 2 existing before the smart space is opened, and displays a reminder of specific duration in any area in the interface, to remind the user that the selected file is stored in the smart space. For example, reminder information of "Storage succeeded" of two seconds may be displayed.

In an actual application, alternatively, after the user lifts the finger, the electronic device may fully open the smart space. For example, the deformed interface 2 is pushed to the leftmost side of the display screen, a partial area of the interface 2 is displayed on the display screen, and an interface of Folder is displayed in a central area of the display screen. The interface of Folder may display icons of a plurality of files that are stored or added to favorites, and the sidebar in the case in which no object is selected is displayed on the right side of the display screen.

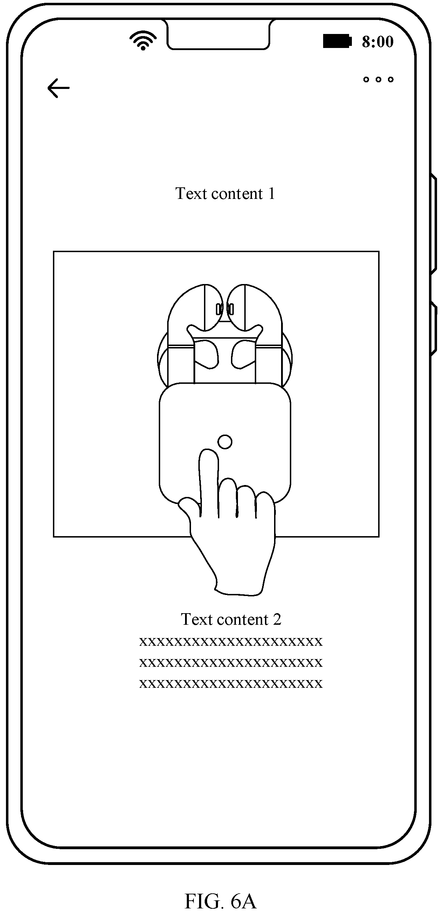

For a display manner after the user lifts the finger, reference may be made to an embodiment shown in FIG. 6A to FIG. 6D.

Referring to FIG. 6A to FIG. 6D, FIG. 6A to FIG. 6D show an example of a process in which the electronic device fully opens the smart space in response to an operation of the user in a case in which a picture is used as an example according to an embodiment of this application.

As shown in FIG. 6A, a text and a picture are displayed in any interface (the interface is denoted as an interface 3) in which a picture is displayed, and the user may select the picture by performing touching and holding in an area in which the picture is displayed.

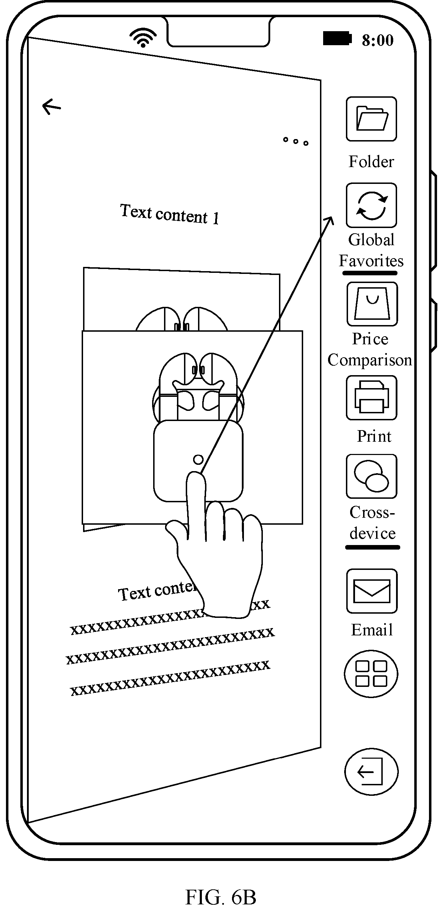

After the picture is selected, the electronic device displays an interface shown in FIG. 6B. In this embodiment of this application, for example, the door of the smart space can be triggered to be half opened once an object is selected. Certainly, a floating-state control of the picture may alternatively be displayed above the interface, and a process in which the user drags the picture is a process in which the user drags the floating-state control.

As shown in FIG. 6B, after the user selects the picture, the electronic device is triggered to half open the smart space. The interface 3 is considered as the door of the smart space, and is partially opened and is visually deformed. Because the selected object is switched to a floating state, it seems that the selected picture is separated from the interface 3. Because the interface 3 is partially opened, the sidebar is displayed in an area that is in the smart space and that is not blocked by the interface 3. In this case, the sidebar displays first-type applications: Folder and Global Favorites, also displays third-type applications matching the selected picture: Price Comparison, Print, and Cross-device, also displays a second-type application: Email, and also displays the setting button and the exit button. The user may drag the selected picture to Global Favorites, to store the selected picture in or add the selected picture to Global Favorites in the smart space, so that some related operations can be subsequently implemented on the picture.

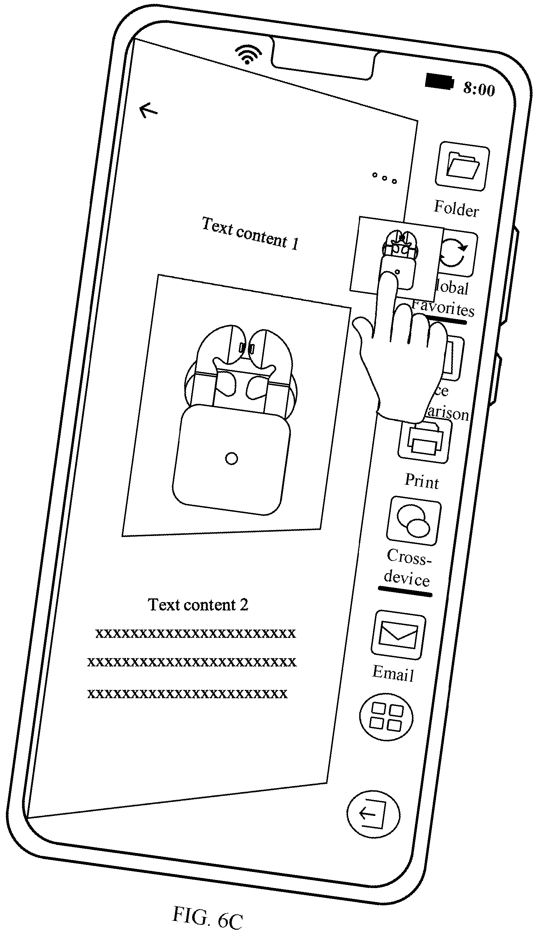

During specific implementation, the finger of the user touches and holds the picture in the interface 3, and then drags the picture to Global Favorites in the right-side sidebar without being lifted. As shown in FIG. 6C, after the finger of the user drags the picture to an area corresponding to the icon of Global Favorites in the sidebar, the icon of Global Favorites does not undergo animation, and remains in an original icon state.

Certainly, after the finger of the user drags the object to the area corresponding to the icon of Global Favorites in the sidebar, the icon of Global Favorites may or may not undergo animation. Whether to perform animation on the icon in the sidebar is not limited in this embodiment of this application. In a process of dragging the picture, the picture may also gradually become smaller, to adapt to a size of the icon in the sidebar, and avoid the following case: Because the picture is excessively large, the picture is located above two application icons.

After dragging the picture to an area above Global Favorites, the user may lift the finger, to trigger the electronic device to store the file in or add the file to Global Favorites.

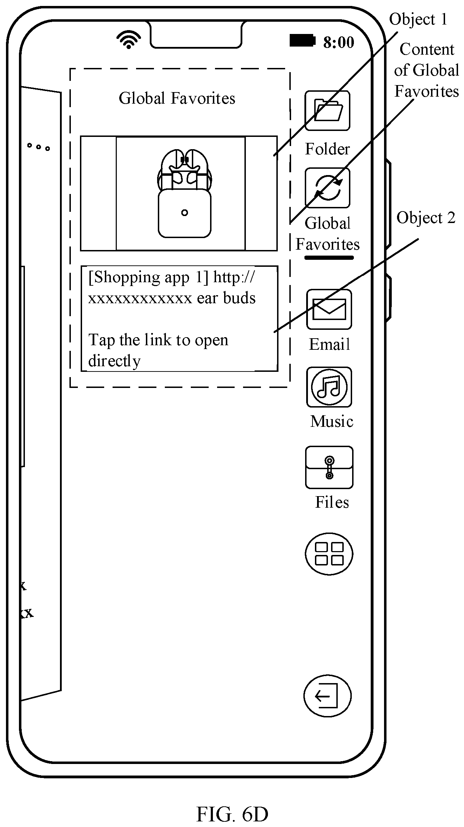

As shown in FIG. 6D, after the user lifts the finger, different from FIG. 5D, the electronic device displays an interface existing after the smart space is fully opened. Because the picture is added to Global Favorites, content of Global Favorites is displayed in a central area of the interface currently displayed in the smart space. For details, reference may be made to the content of Global Favorites circled by a dashed-line box in the interface shown in FIG. 6D. Global Favorites displays, in a form of cards, objects that are added to favorites, for example, the object 1 in the embodiment shown in FIG. 6A to FIG. 6D and the object 2 that is previously added to Global Favorites. The objects added to favorites may be displayed in a time sequence of being added to favorites. For example, an object displayed above is added to favorites at a time later than a time at which an object displayed below is added to favorites. In the sidebar, applications in the case in which no object is selected are displayed: a first-type application and a second-type application, and a third-type application corresponding to the selected picture is not displayed.

It should be noted that in FIG. 5A to FIG. 5D and FIG. 6A to FIG. 6D, storing a file and a picture in the smart space is used as an example. In an actual application, any selected object may be added to the smart space in the manner shown in FIG. 5A to FIG. 5D or FIG. 6A to FIG. 6D. Examples are not provided in this application.

After the object is added to the smart space, the object stored in or added to favorites in the smart space may also be extracted at any subsequent time to perform another processing operation.

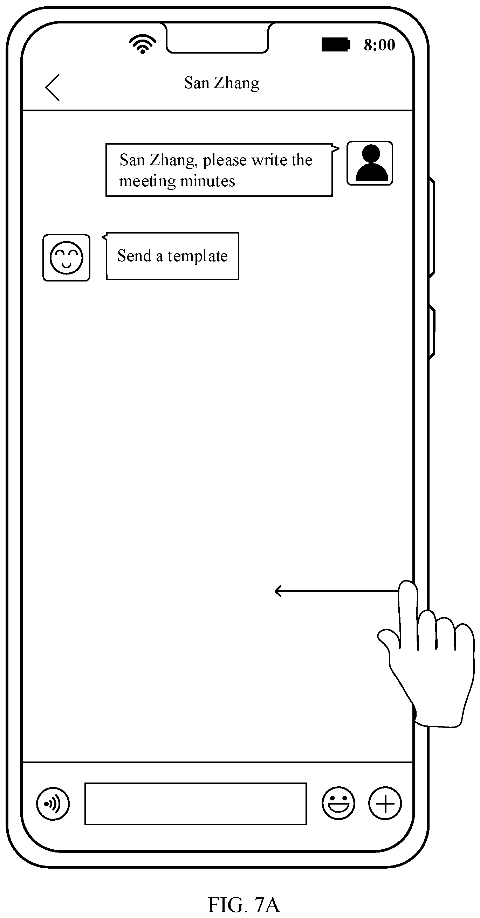

Referring to FIG. 7A to FIG. 7D, FIG. 7A to FIG. 7D are a schematic diagram of a process of extracting a historically stored file from the smart space and forwarding the historically stored file to an instant messaging friend according to an embodiment of this application.

As shown in FIG. 7A, in an instant messaging chatting interface (the interface is denoted as an interface 4) between the user and a friend, the user opens the smart space by using a preset gesture operation of opening the smart space. For example, the finger of the user starts to slide leftward from the rightmost side of the display screen of the electronic device to the leftmost side, and is lifted to open the smart space.

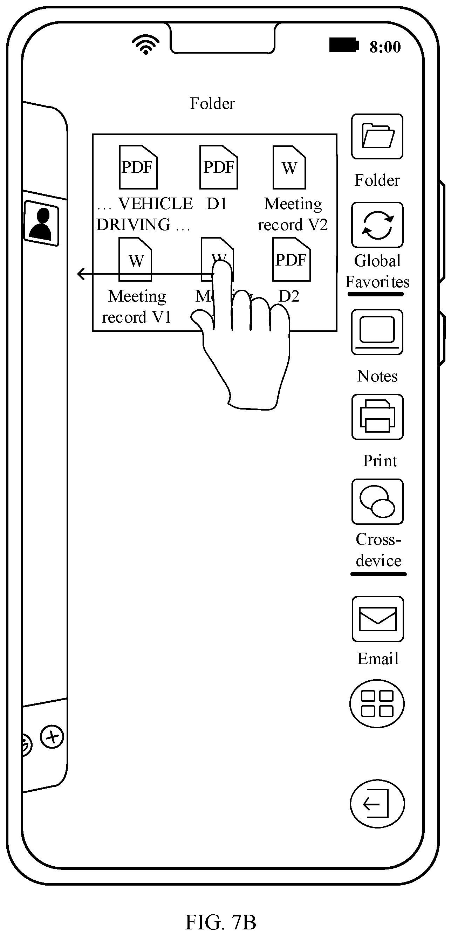

As shown in FIG. 7B, after the user opens the smart space in the manner shown in FIG. 2A to FIG. 2D or FIG. 3A to FIG. 3D, the electronic device displays an interface existing after the smart space is opened, and the deformed interface 4 continues being pushed to the leftmost side of the display screen. Due to limited space of the display screen, a partial area (a bar-shaped area shown in the figure) of the deformed interface 4 is displayed on the display screen. Content of a first-type application is displayed in the central area of the smart space. For example, content of the Folder application is displayed: an icon and a name of a file stored in Folder. In the currently displayed interface, the user selects a file "Conference template" by using the touching and holding gesture, and then drags the selected file to the left-side interface 4 without lifting the finger. Certainly, a floating-state control corresponding to the file may be actually dragged.

It should be noted that the interface shown in FIG. 7B is an interface existing after the user selects the file, and a sidebar in the interface displays a third-type application corresponding to the file.

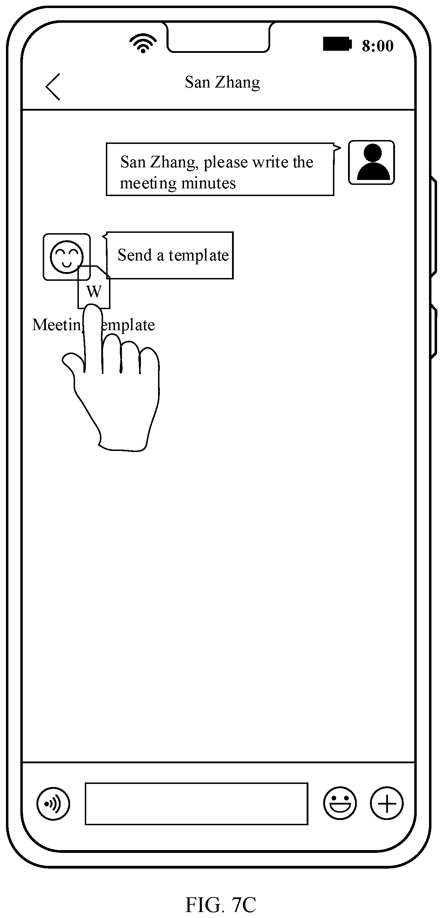

As shown in FIG. 7C, after the user drags, toward the left side, the selected file to an area corresponding to the interface 4 (for example, an area above the interface 4), the display screen of the electronic device displays the interface 4 existing before the smart space is opened. The selected file is displayed above the currently displayed interface 4 through floating.

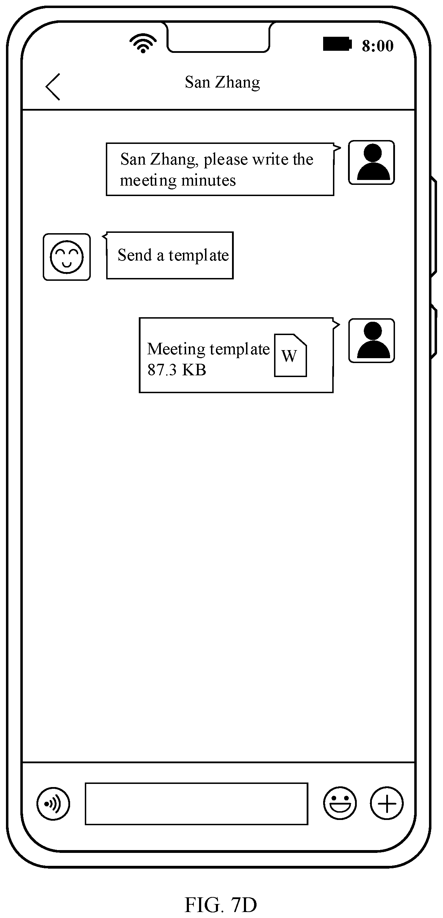

After the finger of the user is lifted from the display screen, the electronic device displays an interface shown in FIG. 7D.

As shown in FIG. 7D, after the user lifts the finger, the selected file is sent to the friend in the interface 4.

It may be understood from this example that the user can open the smart space only by using a continuous dynamic gesture operation, and can also transmit a file in the smart space to an instant messaging friend by using a continuous dynamic gesture operation, and in response to the continuous dynamic gesture, the electronic device directly displays an interface existing after the instant messaging application processes the file: an interface existing after the file is sent. Therefore, the object processing method provided in this embodiment of this application is simpler and quicker.

Certainly, in the object processing method provided in this embodiment of this application, a file can be extracted from the smart space and dragged to the left-side interface for processing, and a picture or a text can also be extracted from the smart space and dragged to the left-side interface for processing. An example in which the picture is extracted and dragged to the left-side interface for processing is used in this embodiment of this application.

As shown in FIG. 8A, in an instant messaging chatting interface (the interface is denoted as an interface 5) between the user and a friend, the user opens the smart space by using a preset gesture operation of opening the smart space. For example, the finger of the user starts to slide leftward from the rightmost side of the display screen of the electronic device to the leftmost side, and is lifted to open the smart space.

As shown in FIG. 8B, after the user opens the smart space in the manner shown in FIG. 2A to FIG. 2D or FIG. 3A to FIG. 3D, the electronic device displays an interface existing after the smart space is opened, and the deformed interface 5 continues being pushed to the leftmost side of the display screen. Due to limited space of the display screen, partial content of the deformed interface 5 is displayed on the display screen. Content of a first-type application is displayed in the central area of the smart space. For example, content of the Folder application is displayed.

An object to be sent by the user is a picture and is stored in Global Favorites. However, application content displayed in the central area by default after the smart space is opened is content of Folder. Therefore, the user needs to tap the icon of Global Favorites in the right-side sidebar, to display content of Global Favorites in the central area of the smart space.

After the user taps the icon of Global Favorites in the sidebar, an interface shown in FIG. 8C is displayed.

Referring to FIG. 8C, FIG. 8C shows the content of Global Favorites displayed in the central area of the smart space after the user taps the icon of Global Favorites.

In the current interface, the user selects an object, for example, a picture, in Global Favorites by using the touching and holding gesture, and then drags the selected picture to the left-side interface 5 without lifting the finger. A floating-state control is dragged in a dragging process, and content of the picture is displayed on the control.

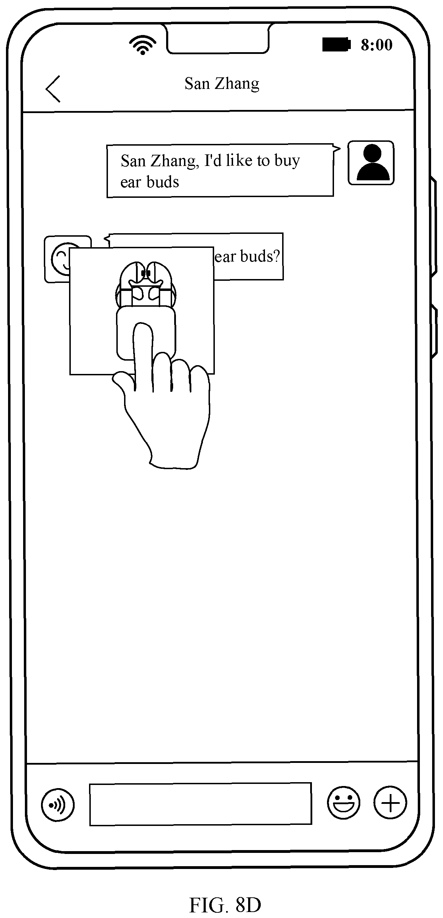

As shown in FIG. 8D, after the user drags, toward the left side, the selected picture to an area corresponding to the interface 5 (for example, an area above the interface 4), the display screen of the electronic device displays the interface 5 existing before the smart space is opened. The selected picture is displayed above the currently displayed interface 5 through floating.

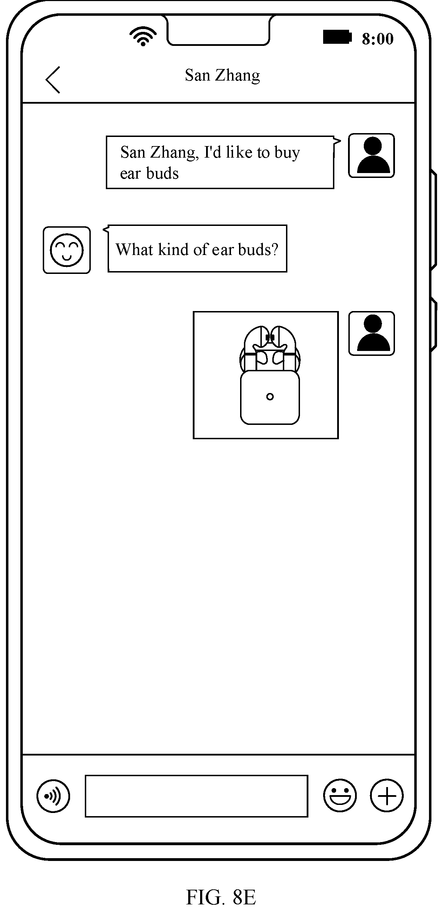

After the user lifts the finger, the electronic device displays an interface shown in FIG. 8E.

As shown in FIG. 8E, after the user lifts the finger, the selected picture is sent to the instant messaging friend in the interface 5.

In this manner, the picture stored in the smart space can be extracted and sent to the instant messaging friend. Certainly, in this manner, another object stored in the smart space can be extracted and sent to the friend, and the like.

In the examples shown in FIG. 7A to FIG. 7D and FIG. 8A to FIG. 8E, after a selected object is dragged to an area above an interface displayed on the left side of the display screen, the electronic device displays the left-side interface in full screen.

In an actual application, an area may alternatively be specified. After the selected object is dragged to a preset area on the left side of the display screen (or the selected object is dragged to a preset area on the left side of the display screen and stays for specific duration), the electronic device displays the left-side interface in full screen. The preset area may be determined by using the left side of the display screen as a left-side edge of the preset area and setting a length of the preset area (in a horizontal direction of the display screen).

In the interface depicted above, when there are at least two first-type applications in the smart space, after the smart space is opened, content of a first-type application is displayed in the central area of the smart space, for example, content of an uppermost first-type application in the sidebar is usually displayed by default. When Folder is located on the uppermost side of the first-type applications displayed in the sidebar, content of Folder is displayed in the central area of the smart space. When Global Favorites is located on the uppermost side of the first-type applications displayed in the sidebar, content of Global Favorites is displayed in the central area of the smart space.

An embodiment of this application further provides an adjustment function, and the user may adjust a display sequence of first-type applications in the sidebar based on a usage habit.

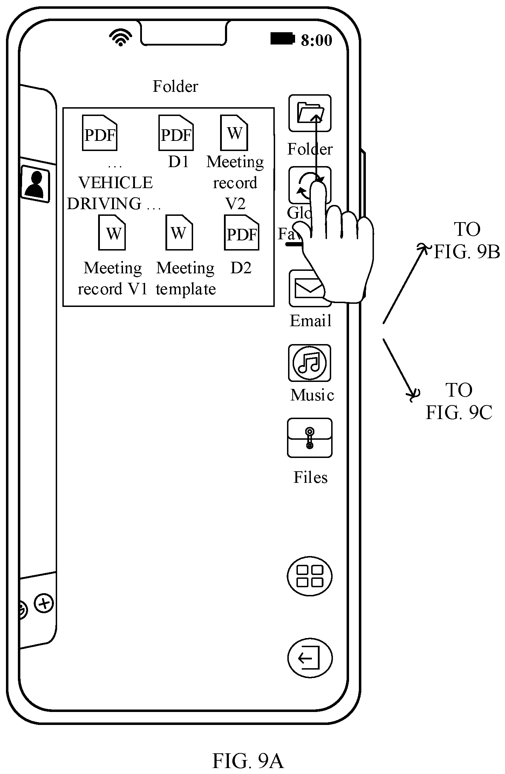

As shown in FIG. 9A, after the smart space is opened, Folder is located at the first location of the first-type applications in the sidebar, and the content of Folder is displayed in the central area of the smart space by default. For the first-type applications in the sidebar, the icon of Folder and the icon of Global Favorites are displayed from top to bottom. The user may tap the icon of Global Favorites, so that the content of Global Favorites is displayed in the central area of the smart space. However, in this manner, it can only be determined that the content of Global Favorites is currently displayed in the central area of the smart space, but it cannot be ensured that the content of Global Favorites is displayed in the central area of the smart space by default after the smart space is subsequently opened. Therefore, the user may touch and hold the icon of Global Favorites and select the icon of Global Favorites, and then drag the icon of Global Favorites to the location of the icon of Folder without lifting the finger.

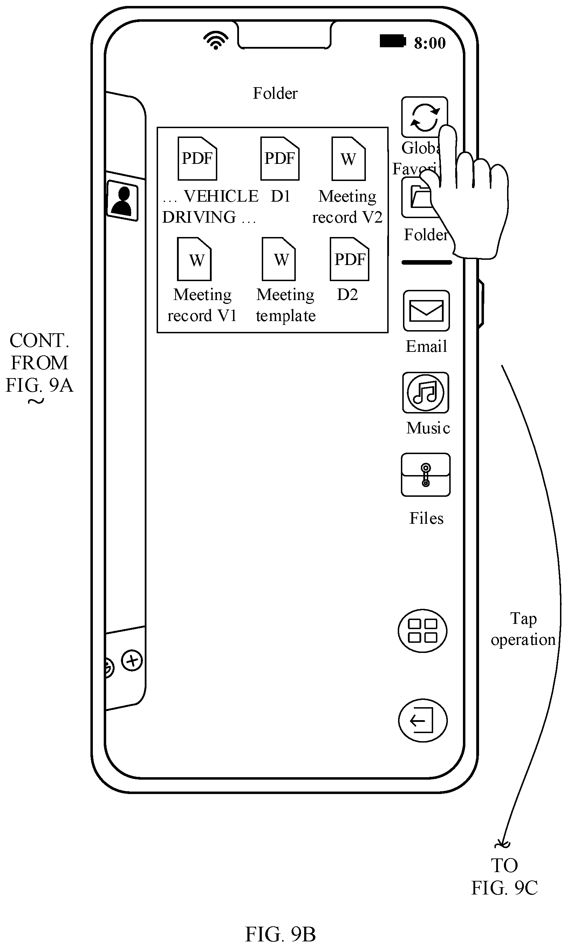

After the finger of the user is lifted, the electronic device displays an interface shown in FIG. 9B.

As shown in FIG. 9B, after the icon of Global Favorites is dragged to the first location of the first-type applications in the sidebar, the icon of Folder moves downward by one location. Therefore, the icon of Global Favorites is located at the uppermost location in the sidebar, and Folder is located at the second location in the sidebar. In this example, after a sequence of the icons of the first-type applications in the sidebar changes, an application interface displayed in the central area of the smart space does not change this time. When the smart space is opened next time, the first icon of the first-type applications in the sidebar is displayed in the central area of the smart space.

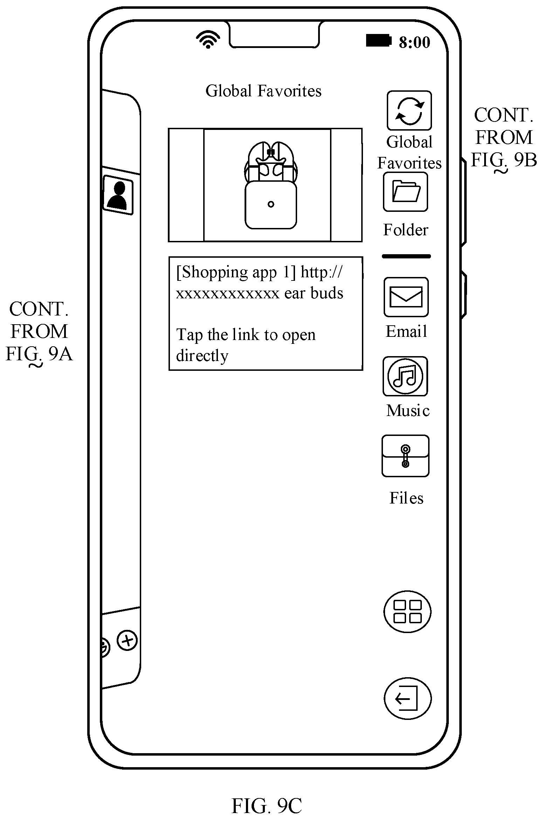

In the interface shown in FIG. 9B, the user may also tap the icon of Global Favorites, to trigger an object stored in or added to Global Favorites to be displayed in a central area of the currently displayed interface, in other words, tap the icon of Global Favorites, to trigger the electronic device to display an interface shown in FIG. 9C.

For another example, as the gesture operation shown in FIG. 9A ends, the application interface displayed in the central area of the smart space may also change with the sequence of the application icons in the sidebar. For example, the electronic device may directly display the interface shown in FIG. 9C.

As shown in FIG. 9C, after the icon of Global Favorites is dragged to the first location of the first-type applications in the sidebar, the icon of Folder moves downward by one location. Therefore, the icon of Global Favorites is located at the uppermost location in the sidebar, and Folder is located at the second location in the sidebar. In this example, after the sequence of the icons of the first-type applications in the sidebar changes, content displayed in the central area of the smart space changes, to be specific, is updated to the object stored in or added to Global Favorites.

Whether the solution shown in FIG. 9B or the solution shown in FIG. 9C is specifically used is not limited in this embodiment of this application.

As shown in FIG. 7A to FIG. 7D and FIG. 8A to FIG. 8E, an object is extracted from the smart space and sent to an instant messaging friend. In an actual application, an object in the smart space may alternatively be extracted and dragged to the left-side interface to implement another operation.

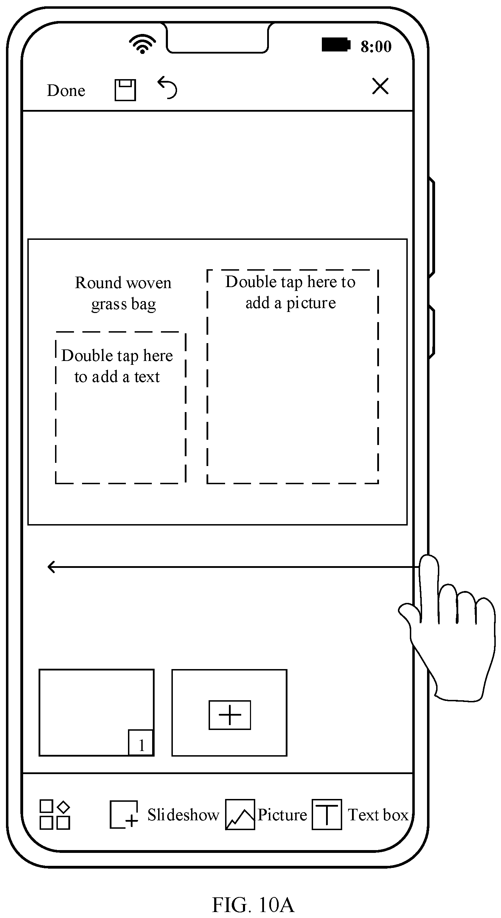

Referring to FIG. 10A to FIG. 10D, FIG. 10A to FIG. 10D show a process of extracting a text from the smart space and placing the text in a left-side document editing interface for editing according to an embodiment of this application.

As shown in FIG. 10A, the electronic device displays the document editing interface (the interface is denoted as an interface 6). The interface may be an editing interface of PowerPoint (PowerPoint, PPT). When the user wants to add a text or a picture stored in the smart space to the editing interface of ppt, the user may open the smart space by using a preset gesture of opening the smart space. Certainly, a file stored in the smart space may alternatively be inserted into the editing interface of ppt. Examples are not provided in this application.

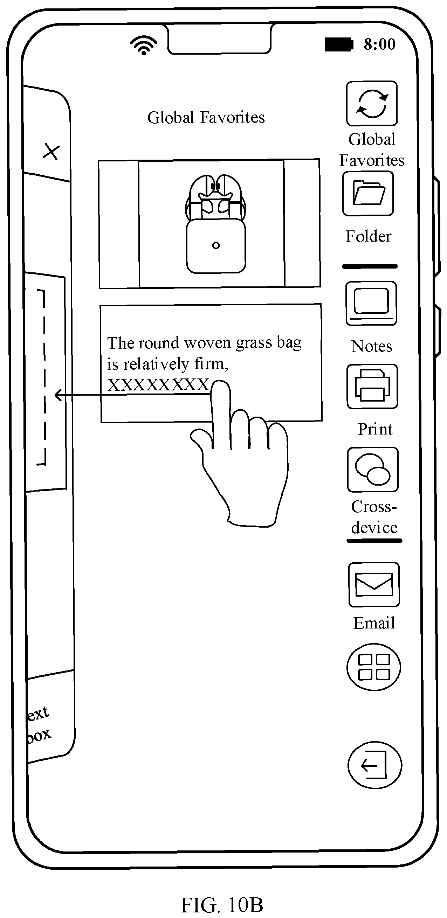

As shown in FIG. 10B, after the smart space is opened, content of Global Favorites is displayed in the central area of the smart space. Global Favorites includes a picture and text content. When the user needs to add the text content to a ppt document, the user may touch and hold a card area corresponding to the text content. After selecting the text content, the user drags the text content to the left side without lifting the finger, to drag the text content to the interface 6. After the text object is selected, a text card becomes a floating-state control, and the text content is displayed on the floating-state control. In a process of dragging the text, the floating-state control is dragged.

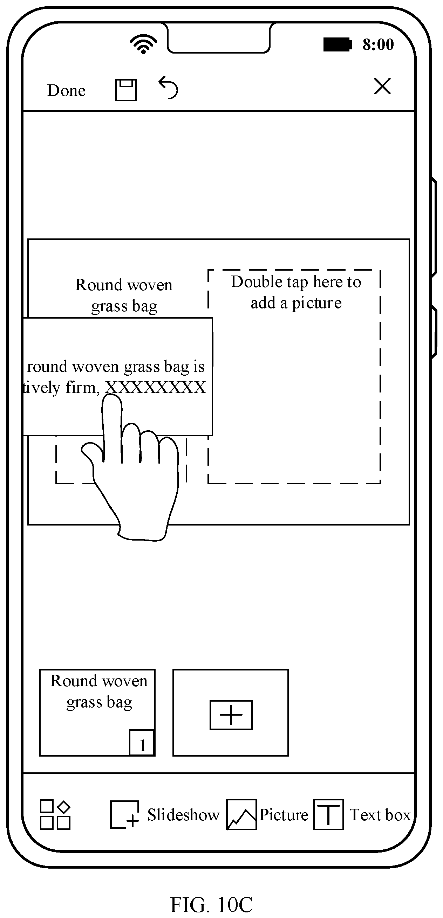

After the finger of the user drags the text content to an area above an area corresponding to the left-side interface 6, the electronic device displays an interface shown in FIG. 10C.

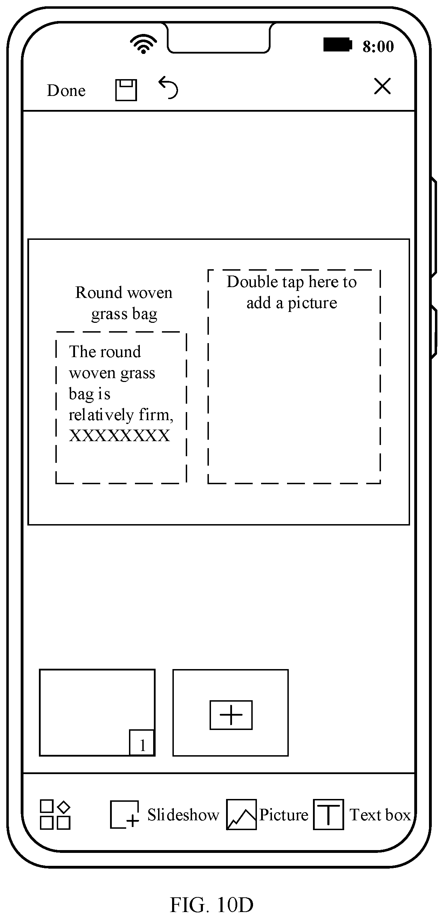

As shown in FIG. 10C, the electronic device displays the left-side interface 6 in full screen, and the selected text content is displayed in an area above the interface 6 through floating. The finger of the user may drag, without being lifted, the text content to an area in which the text content can be added, and then is lifted. The electronic device displays an interface shown in FIG. 10D.

As shown in FIG. 10D, after the user lifts the finger, the selected text content is added to a corresponding area in the editing interface of ppt. The interface is an interface existing after the text is processed.

The user may continue to add the picture in Global Favorites to the ppt document in the foregoing manner. In this manner, a material may be collected in advance on a network, and the collected material may be stored in the smart space. When a ppt needs to be created, the collected material may be extracted from the smart space and added to the ppt. It may also be understood from this process that in this manner, a continuous dynamic gesture is required to open the smart space, and a continuous dynamic gesture is required to move an object in the smart space to a left-side interface for processing, and therefore, this manner is simpler and quicker.

During specific implementation, an object stored in or added to favorites in the smart space may be dragged to the left-side interface to perform a corresponding operation, or certainly, may be dragged to an application corresponding to an icon displayed in the right-side sidebar to perform corresponding operation processing.

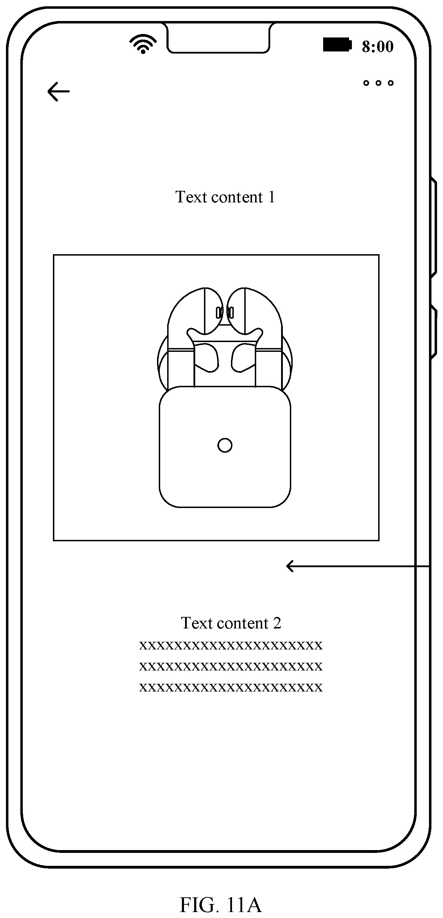

Referring to FIG. 11A to FIG. 11C, FIG. 11A to FIG. 11C show an example in which an object is selected from the smart space and dragged to an application icon in the right-side sidebar to perform a corresponding operation according to an embodiment of this application.

As shown in FIG. 11A, the display screen of the electronic device displays any interface. When the electronic device displays the any interface, the finger of the user starts to slide leftward from the rightmost side of the display screen of the electronic device to the left side of the display screen, to open the smart space.

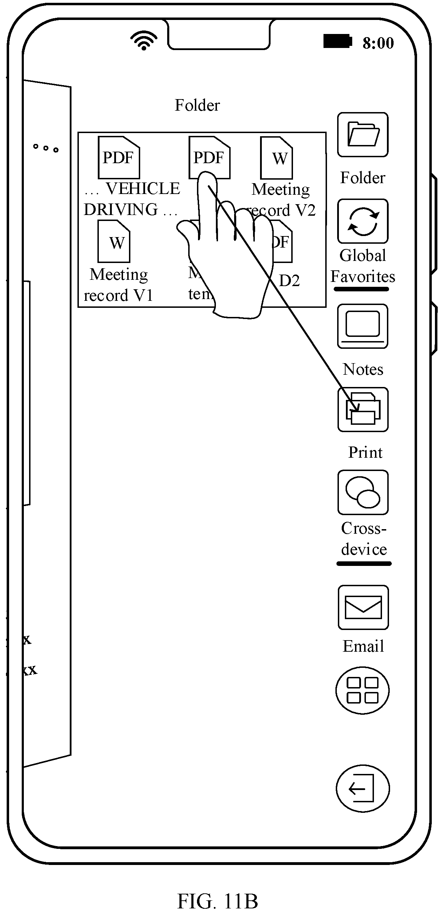

As shown in FIG. 11B, after the smart space is opened, content of Folder is displayed in the central area of the smart space. A plurality of files that are stored in Folder are displayed in the content of Folder. The user touches and holds one of the documents, and the document is selected. After any document is selected, third-type application icons corresponding to the document are added to and displayed in the right-side sidebar: an icon of Notes, an icon of Print, an icon of Cross-device, and the like. The user may drag the document to any third-type application icon without lifting the finger. In this embodiment of this application, in an example of printing the document, the document may be dragged to the icon of Print.

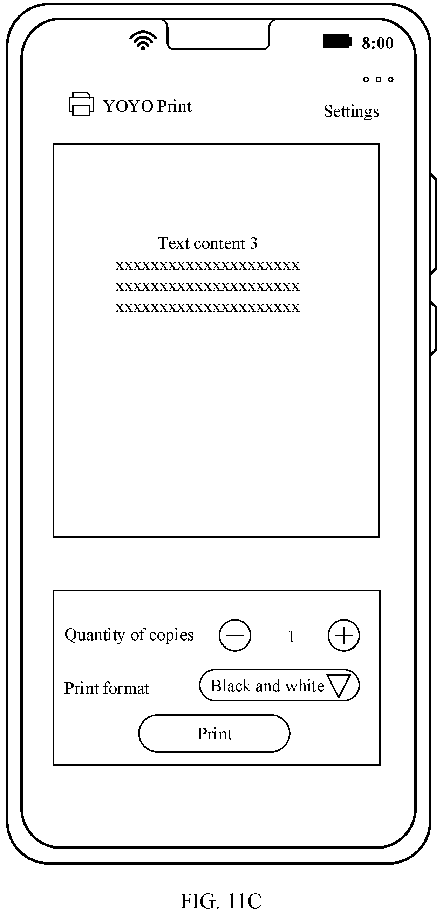

As shown in FIG. 11C, after the document is dragged to an area above the icon of Print, the finger of the user is lifted, and the electronic device displays a printing interface in full screen. The printing interface displays content of the document. The user may set a printing parameter in the printing interface, and perform a printing operation on the document. The printing interface is an interface existing before operation processing is performed on the document.

In this manner, a document in the smart space may be printed by using a two-step dynamic gesture operation. First, the smart space is opened by using a continuous dynamic gesture, and then the document in the smart space is dragged to the icon of Print by using a continuous dynamic gesture, to enter a printing interface for the document. This manner is convenient and quick.

In this embodiment of this application, a picture or a text in the smart space may be further dragged to an area above an icon displayed in the right-side sidebar, to perform a related operation on the picture or the text by using an application corresponding to the icon. The following uses the picture as an example.

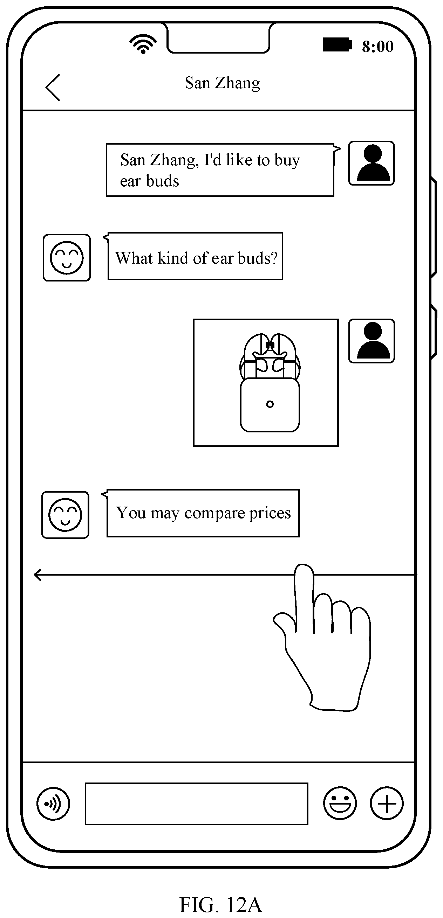

As shown in FIG. 12A, the display screen of the electronic device displays any interface. When the electronic device displays the any interface, the finger of the user starts to slide leftward from the rightmost side of the display screen of the electronic device to the left side of the display screen, to open the smart space.

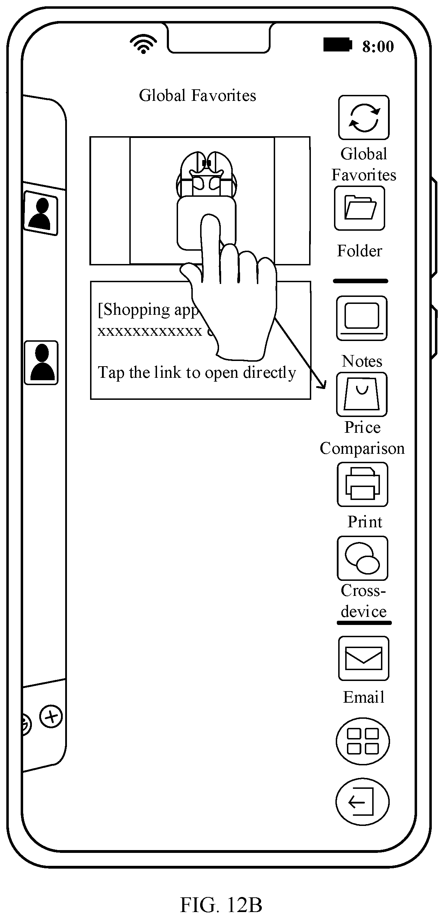

As shown in FIG. 12B, after the smart space is opened, content of Global Favorites is displayed in the central area of the smart space, and the content of Global Favorites includes a picture and a link. The user selects the picture by touching and holding a card corresponding to the picture. The picture is updated to a floating state. The right-side sidebar displays a first-type application, a second-type application, a third-type application, and the like. Because the picture is identified as a product picture, an icon of a third-type application displayed in a smart recommended application is an application icon related to the product picture. The user drags the selected picture to an area above an icon of Price Comparison without lifting the finger. After the selected product picture is dragged to the area above the icon of Price Comparison, the finger of the user is lifted, and the electronic device may display a price comparison interface.

This embodiment of this application provides three interface display manners in a case in which a third-type application in the right-side sidebar processes an object.

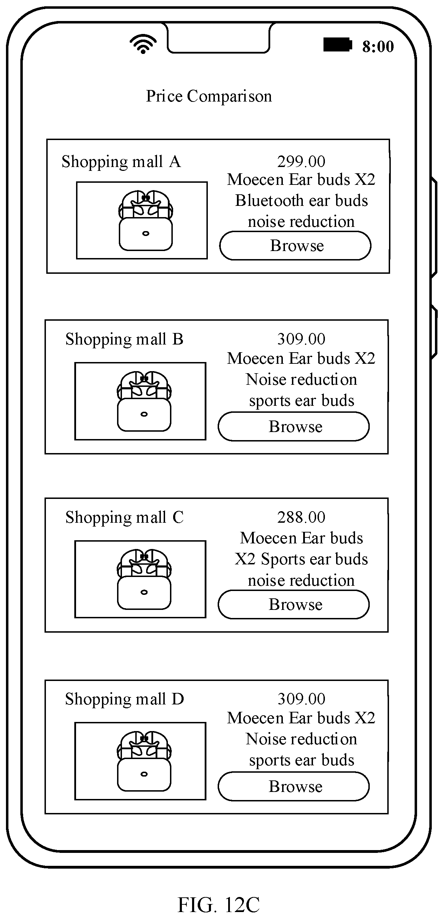

Referring to FIG. 12C, FIG. 12C shows a display manner of a price comparison interface according to an embodiment of this application. The price comparison interface is displayed on the display screen of the electronic device in full screen.

It should be noted that in this embodiment of this application, underlying logic for displaying the price comparison interface on the display screen of the electronic device in full screen may be a price comparison interface opened by the Price Comparison application enabled after the smart space is closed; or may be a full-screen interface displayed after the interface displayed on the left side and the right-side sidebar in the smart space are pushed.

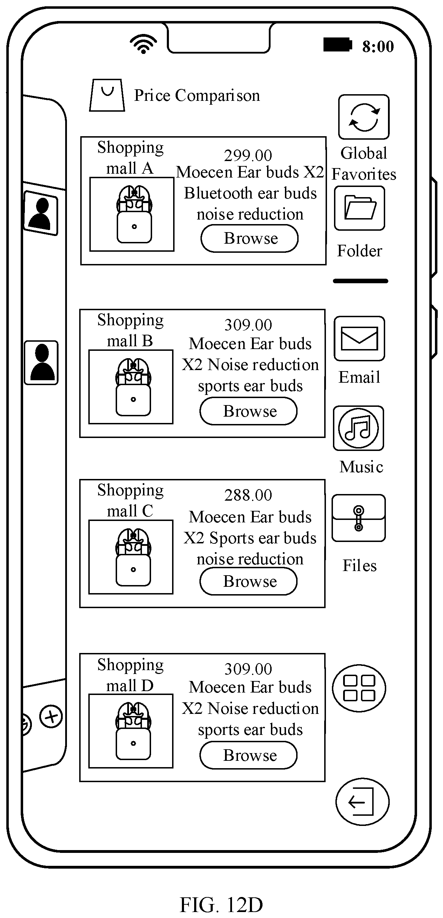

Referring to FIG. 12D, FIG. 12D shows another display manner of a price comparison interface according to an embodiment of this application. The price comparison interface is displayed in the central area of the smart space, a partial area of an interface existing before the smart space is opened is displayed on the left side of the smart space, and the sidebar is displayed on the right side.

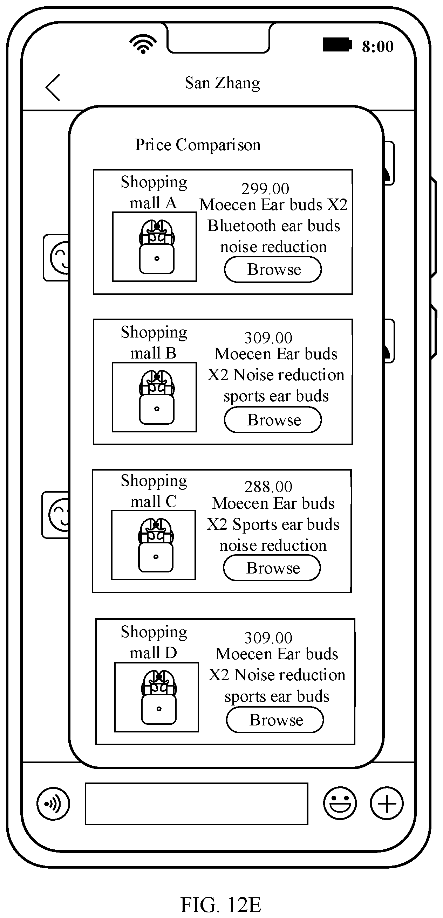

Referring to FIG. 12E, FIG. 12E shows another display manner of a price comparison interface according to an embodiment of this application. The price comparison interface is displayed as a floating window in an area above an interface (the interface is displayed in full screen) displayed by the electronic device before the smart space is opened.

In this application, only the price comparison interface is used as an example. In an actual application, interfaces existing before and after the smart recommended application in the sidebar processes an object can be displayed in any of the foregoing manners.

In the foregoing example, an object in the smart space is dragged to the left-side interface to perform a corresponding operation, or an object in the smart space is dragged to an area above an icon in the right-side sidebar to perform a corresponding operation. In an actual application, alternatively, an object may be selected from an interface (an object exists in the interface) currently displayed by the electronic device, to trigger the smart space to be opened, and then the selected object is dragged to an area above an icon provided in the sidebar in the smart space, to perform corresponding operation processing. Because only the sidebar needs to be used for this function, the following setting may be performed: The object is touched and held in any interface to trigger the electronic device to half open the smart space, to obtain the interface form shown in FIG. 2B. An interface previously displayed by the electronic device is deformed and partially pushed, and the sidebar is displayed on the right side of an interface currently displayed by the electronic device. This door opening manner occurs in a case in which an object is preselected. Therefore, the sidebar needs to display an icon of a third-type application, in other words, display an application icon corresponding to the currently selected object.

Certainly, in an actual application, the following setting may alternatively be performed: Any object in a current interface is touched and held to trigger the electronic device to fully open the smart space; or any object in a current interface is touched and held and then dragged to an enable area to trigger the electronic device to fully open the smart space; or any object in a current interface is touched and held and then dragged to an enable area (for example, the area A in the foregoing example), and the object stays for specific duration, to trigger the electronic device to fully open the smart space. Fully opening the interface of the smart space means that the current interface is pushed to the leftmost side of the display screen to display a bar-shaped area, an interface of an application in the space is displayed in the central area, and the sidebar is displayed on the right side.

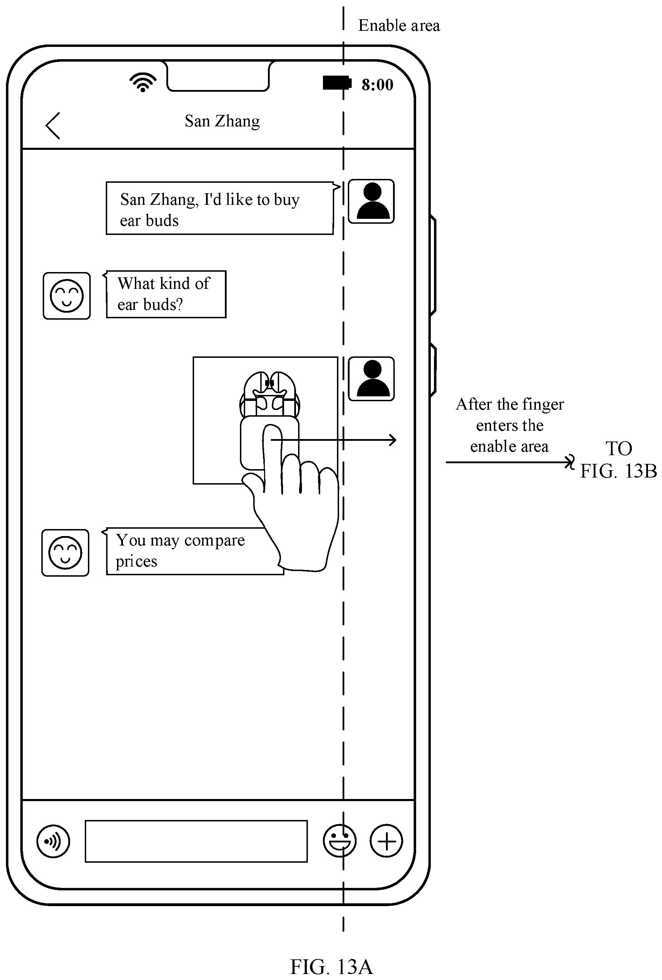

As shown in FIG. 13A, an interface (the interface is denoted as an interface 7) displayed by the electronic device is the same as the interface displayed in FIG. 12A. The interface includes a picture object. The user touches and holds the picture object, and drags the picture to the right side without lifting the finger after selecting the picture, until the finger drags the picture to the corresponding enable area on the rightmost side and the picture stays for specific duration, to open the smart space. Certainly, after the picture is selected, the floating-state picture may alternatively be displayed above the interface.

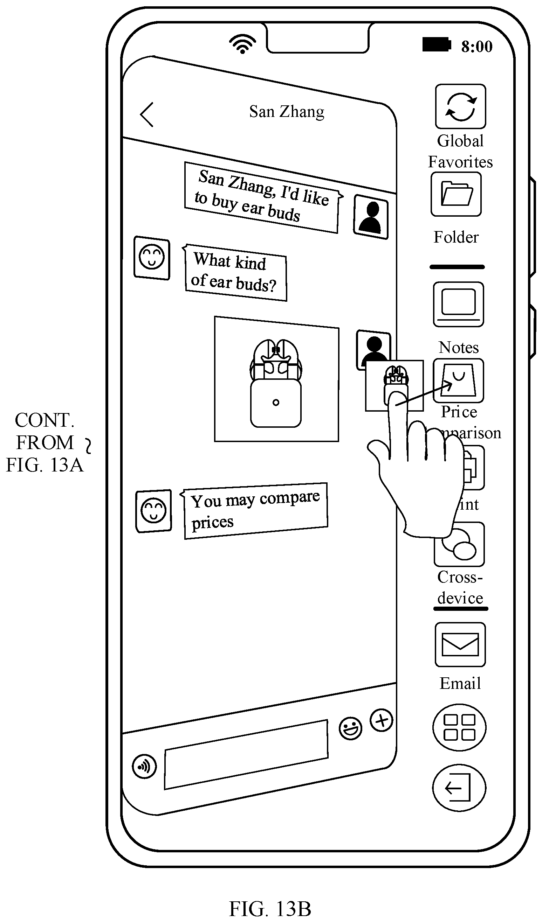

As shown in FIG. 13B, after the finger of the user drags the object to the enable area, in the interface displayed by the electronic device, the interface 7 is deformed and partially pushed to display the right-side area in the smart space, and the sidebar in the right-side area in the smart space is displayed. Because the object is selected, an icon displayed in the right-side sidebar includes an icon of a third-type application, and the user drags the selected picture to an area above the icon of Price Comparison, and releases the finger.

Certainly, in a case in which the user does not release the finger, the user may drag the selected object from an area above an icon to an area above another icon in the sidebar. Operation processing corresponding to an icon above which the object is located when the user releases the finger is performed on the picture.

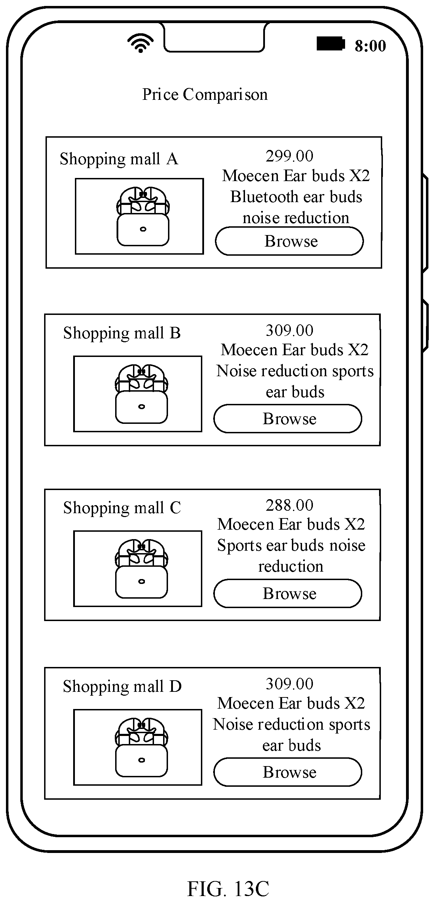

As shown in FIG. 13C, the electronic device displays a price comparison interface in full screen. Certainly, a display manner of the price comparison interface may alternatively include any one of the foregoing examples.

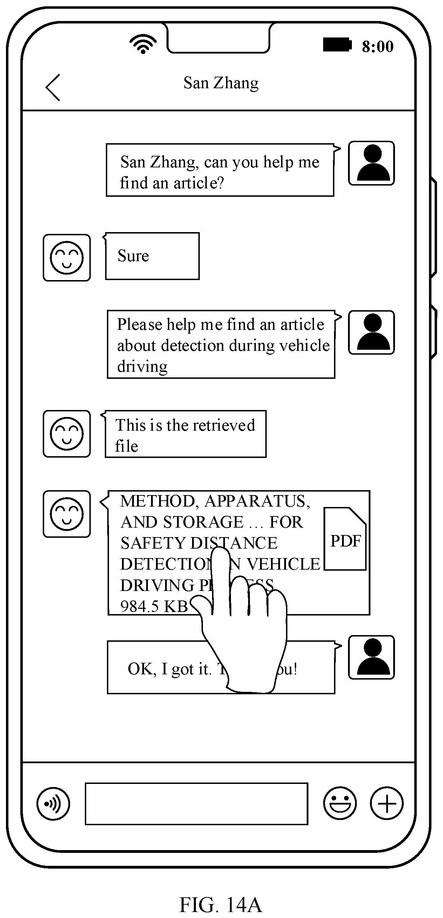

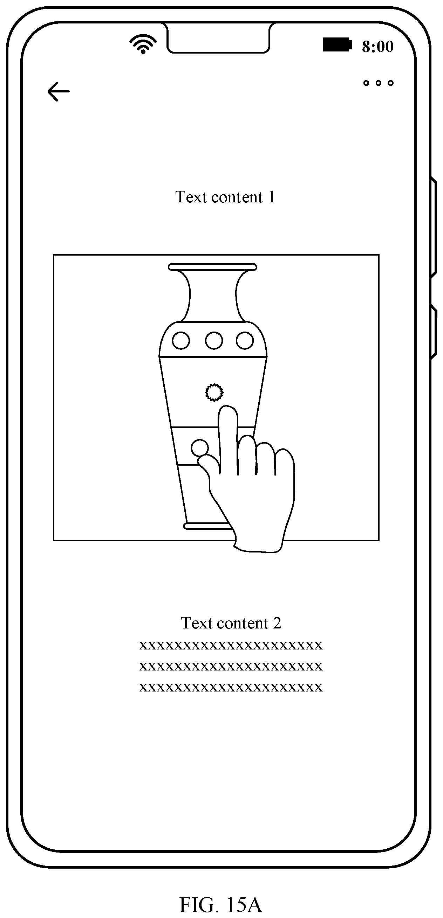

An embodiment of this application further provides an example in which after an object is selected in a current interface to open the smart space, the object is dragged to an icon of another smart recommended application to perform a corresponding operation. For details, reference may be made to examples shown in FIG. 14A to FIG. 14C and FIG. 15A to FIG. 15D.

As shown in FIG. 14A, the electronic device displays any interface (the interface is denoted as an interface 8) that includes a file. The user touches and holds the file object to open the smart space.

In this embodiment of this application, an example in which the smart space is opened by touching and holding the object is used. In an actual application, the smart space may alternatively be opened based on the gesture operation shown in FIG. 13A to FIG. 13C.

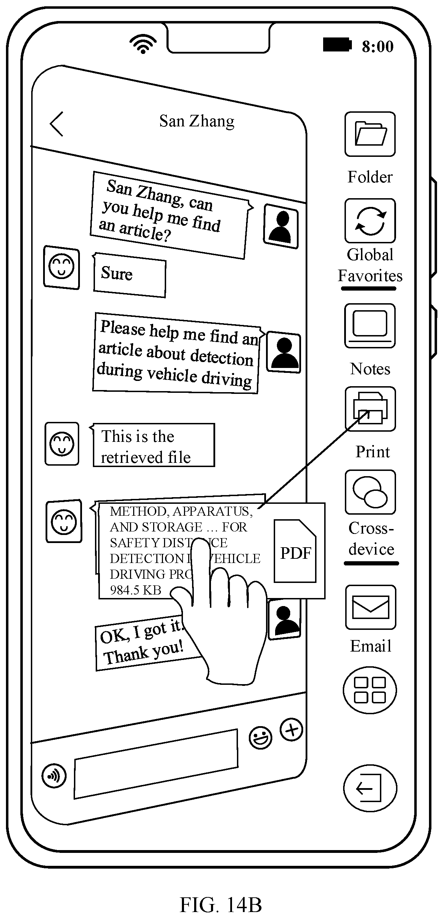

As shown in FIG. 14B, after the smart space is opened, the interface 8 is deformed and pushed to the left-side area and the middle area in the smart space. The sidebar in the right-side area in the smart space is displayed. Because the object is selected, an icon displayed in the right-side sidebar includes an icon of a third-type application, and the user drags the selected file to an area above the icon of Print, and lifts the finger.

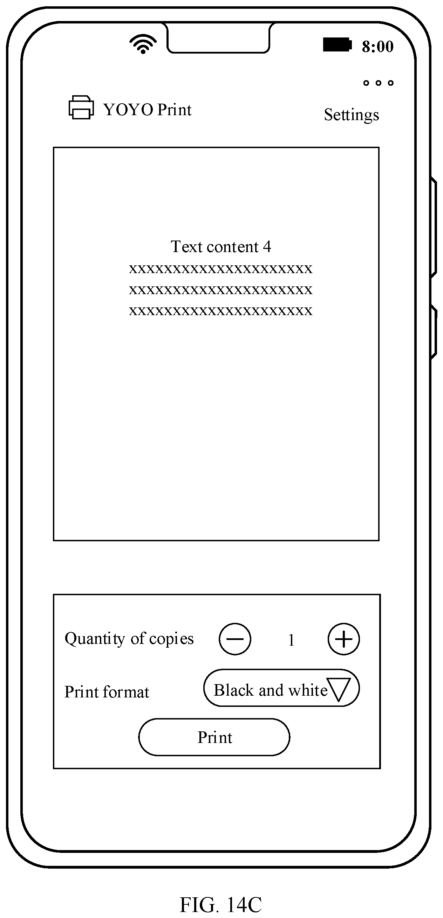

As shown in FIG. 14C, after the user lifts the finger, the electronic device displays a printing interface. Certainly, the printing interface may also be displayed in three manners. Examples are not provided in this embodiment of this application.

In another example provided in this embodiment of this application, as shown in FIG. 15A, the electronic device displays any interface (the interface is denoted as an interface 9) that includes a picture. The user touches and holds the picture object to open the smart space.

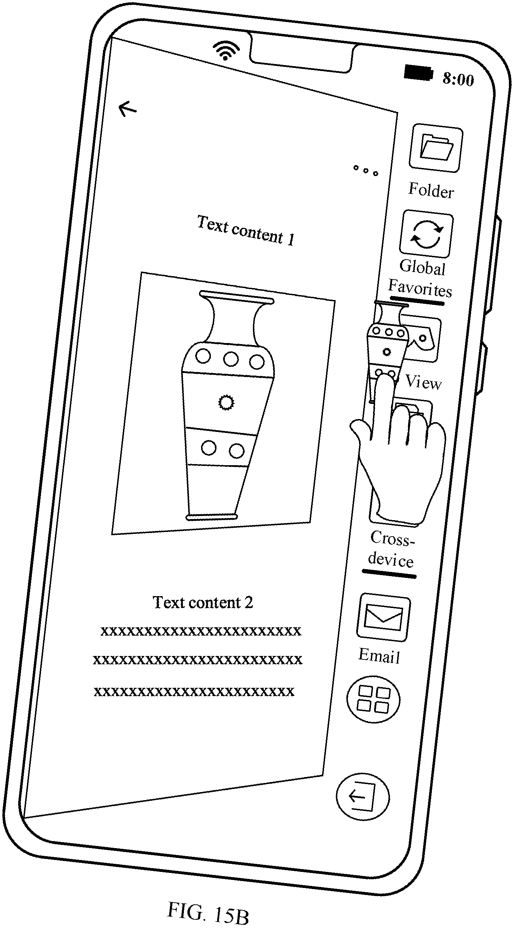

As shown in FIG. 15B, in the interface displayed by the electronic device, the interface 9 is deformed and pushed to display the left-side area and the middle area in the smart space. The sidebar in the right-side area in the smart space is displayed. Because the object is selected, an icon displayed in the right-side sidebar includes an icon of a third-type application. Because the picture is identified as an antique, the right-side smart recommended application icons include an icon of 3D View, and the user drags the selected picture to an area corresponding to the icon of 3D View.

In an actual application, when the electronic device identifies that a three-dimensional image of an item in the picture is stored, the electronic device recommends a 3D View application service.

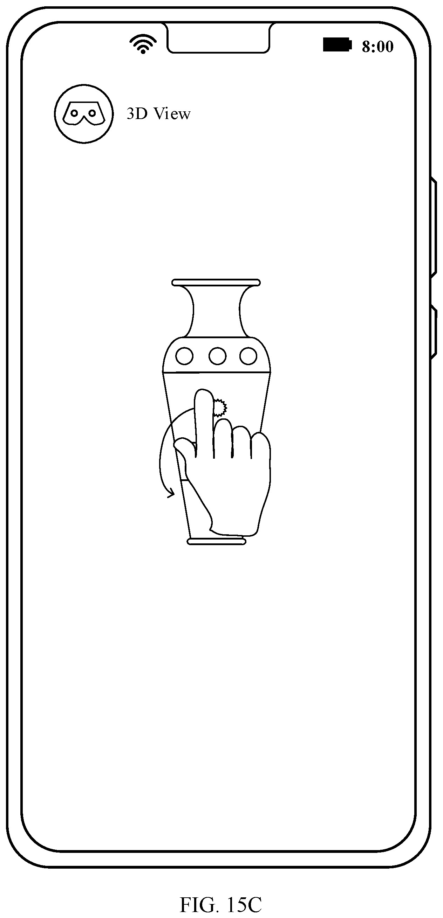

As shown in FIG. 15C, after the user drags the picture to an area above the icon of 3D View, and lifts the finger, the electronic device displays an interface of the 3D View application in full screen, and the interface displays the image of the item. Certainly, the interface of the 3D View application may also be displayed in the three manners listed above. A manner to be specifically used is set based on a case.

The user may drag the picture in the interface to display an image, at another angle, of the item displayed in the image.

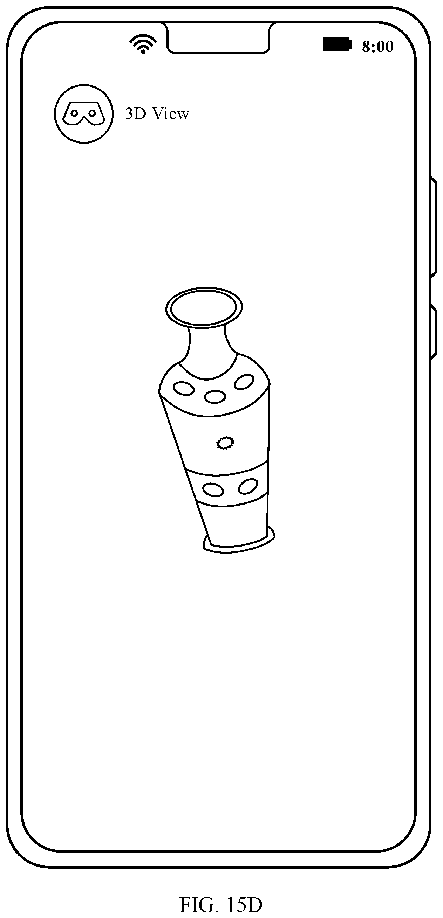

Referring to FIG. 15D, FIG. 15D is a schematic interface diagram in which the electronic device displays another angle of the item after the user drags the picture.

In another embodiment of this application, the following setting may alternatively be performed: After the user drags the picture to the area above the icon of 3D View, and lifts the finger, the electronic device displays the interface of 3D View in the manner shown in FIG. 12D, to be specific, the interface of 3D View is displayed in the middle area, the interface 9 is displayed on the left side, and the sidebar is displayed on the right side. When the user drags the picture in the interface of 3D View, to better present a 3D view effect, the interface of 3D View is displayed in the manner shown in FIG. 15D. A specific display manner is not limited in this embodiment of this application.

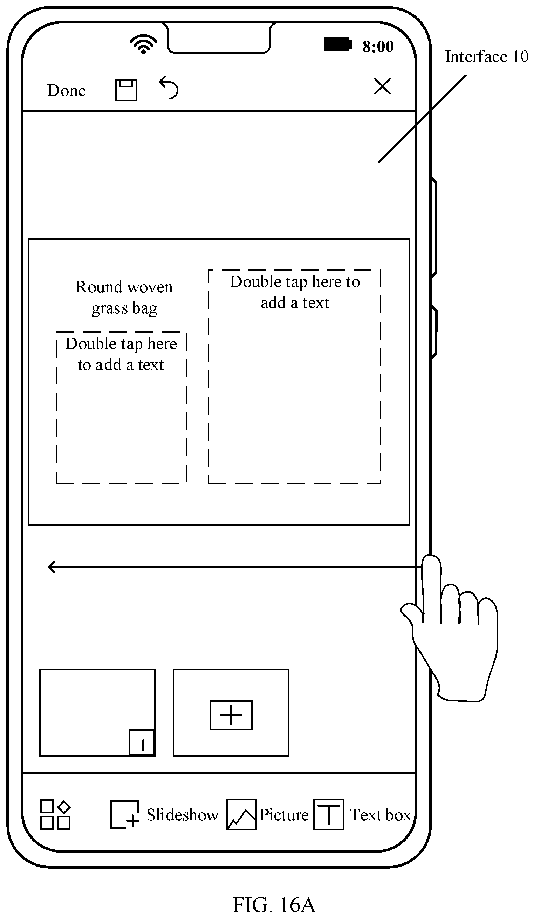

In the foregoing example, all first-type applications are displayed in a form of icons in the sidebar on the rightmost side of the smart space, or content of one of the first-type applications is displayed in the central area of the smart space. In an actual application, an interface corresponding to the first-type application may alternatively be displayed through floating above another interface, and in the case of floating display, an object stored in or added to favorites in the first-type application is dragged to the another interface for processing. For details, reference may be made to an embodiment shown in FIG. 16A to FIG. 16F.

As shown in FIG. 16A, the electronic device displays an interface (which may be denoted as an interface 10). When the electronic device displays the interface, the finger of the user starts to slide leftward from the rightmost side of the display screen of the electronic device, to open the smart space.

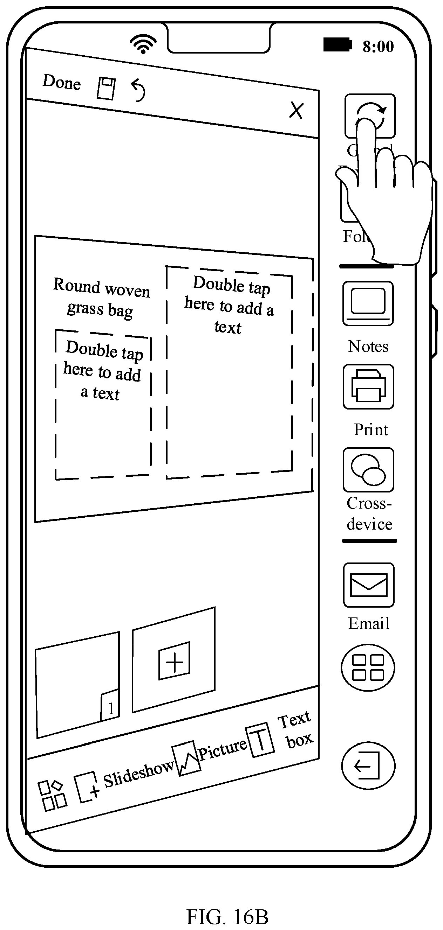

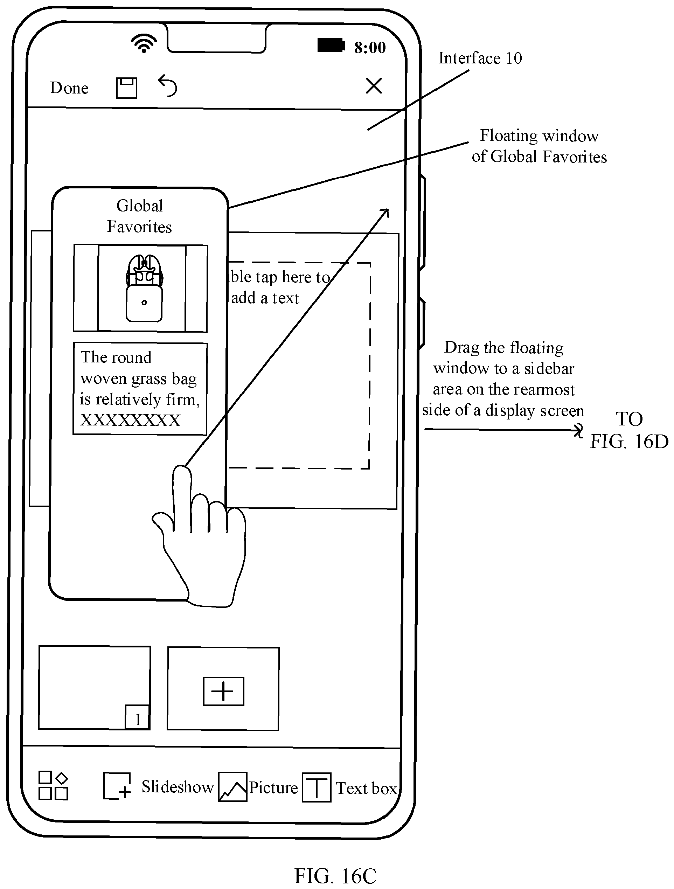

As shown in FIG. 16B, after the smart space is half opened after the finger of the user slides into the central area and is lifted, the user taps the icon of Global Favorites in the right-side sidebar to trigger the electronic device to display FIG. 16C.

As shown in FIG. 16C, in response to the operation shown in FIG. 16B, the electronic device displays the interface 10 in full screen, and displays a floating window of Global Favorites above the interface 10, and an object stored or added to favorites is displayed in the floating window. Because Global Favorites is displayed above the interface 10 in a form of the floating window, the user may drag the floating window to change a display location of the floating window above the interface 10.

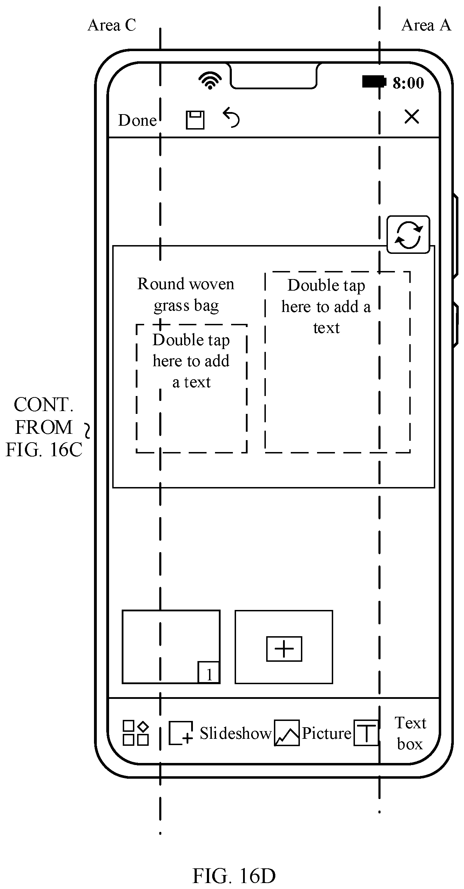

As shown in FIG. 16D, when the floating window is dragged to the area A (which may alternatively be another area different from the area A) on the rightmost side of the display screen, the floating window of Global Favorites is closed, and a floating ball icon of Global Favorites is displayed in the original sidebar area. In an actual application, the following setting may alternatively be performed: When the floating window is dragged to the leftmost-side area C (which may alternatively be another area different from the area C), the floating window of Global Favorites is closed, and the floating ball icon of Global Favorites is displayed in the left-side area.

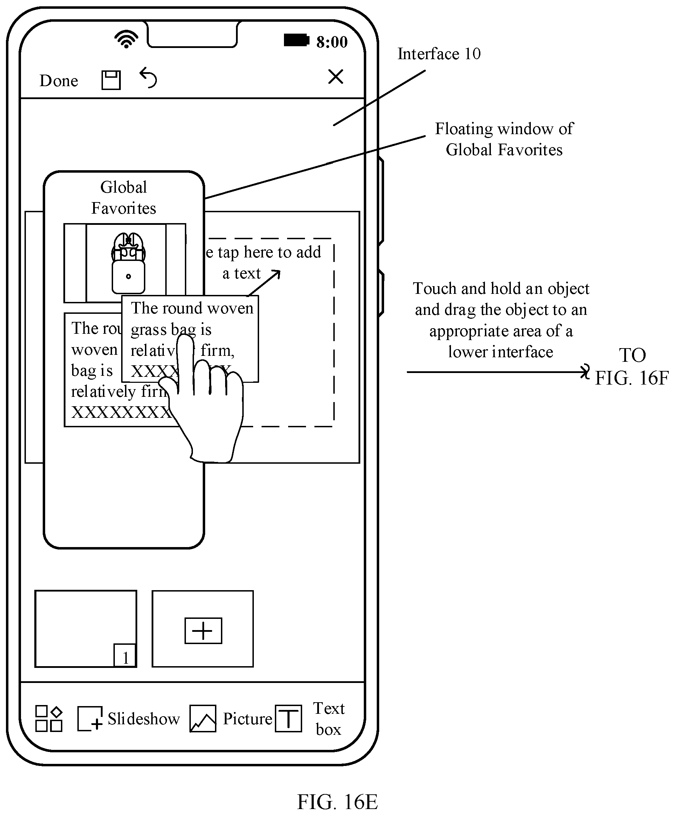

As shown in FIG. 16E, in response to the operation shown in FIG. 16B, the electronic device displays the interface 10 in full screen, and displays a floating window of Global Favorites above the interface 10, and an object stored or added to favorites is displayed in the floating window. The user may touch and hold an object in a floating window interface to select the object in the floating window. After the object is selected, the object is switched to a floating state. When the user does not lift the finger, the user continues to drag the floating-state object to a corresponding area (for example, an area in which an object can be added) of the interface 10, and then lifts the finger, to add the selected object to the corresponding area of the interface 10. In this embodiment of this application, for example, a text is selected.

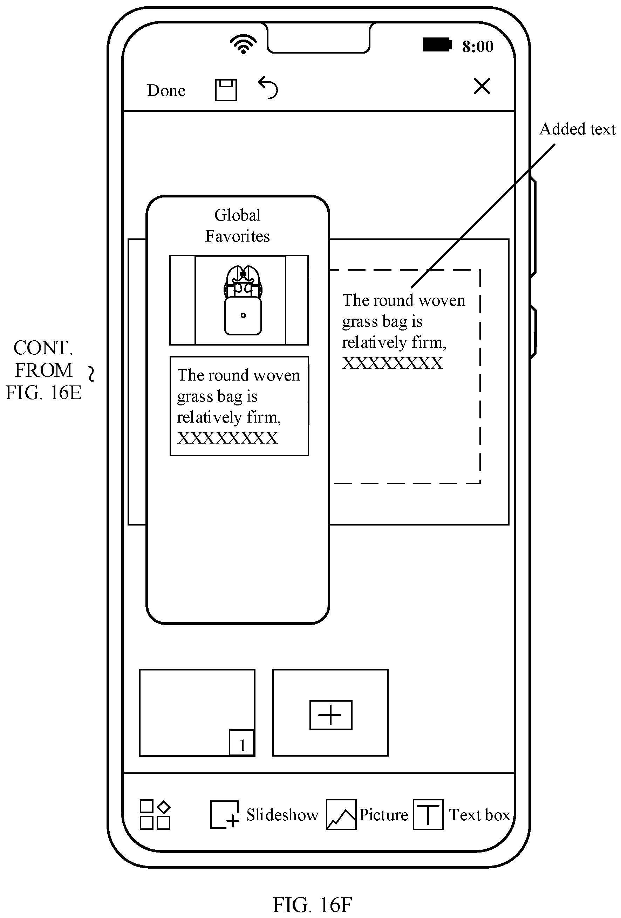

As shown in FIG. 16F, in response to the operation shown in FIG. 16E, the selected text is added to the interface 10 displayed by the electronic device, and the floating window interface of Global Favorites continues being displayed above the interface 10.

In this example, Global Favorites is used as an example. In an actual application, Global Favorites may alternatively be any first-type application.

During specific implementation of the embodiment shown in FIG. 16A to FIG. 16F, the embodiment may be performed when the smart space is fully opened.

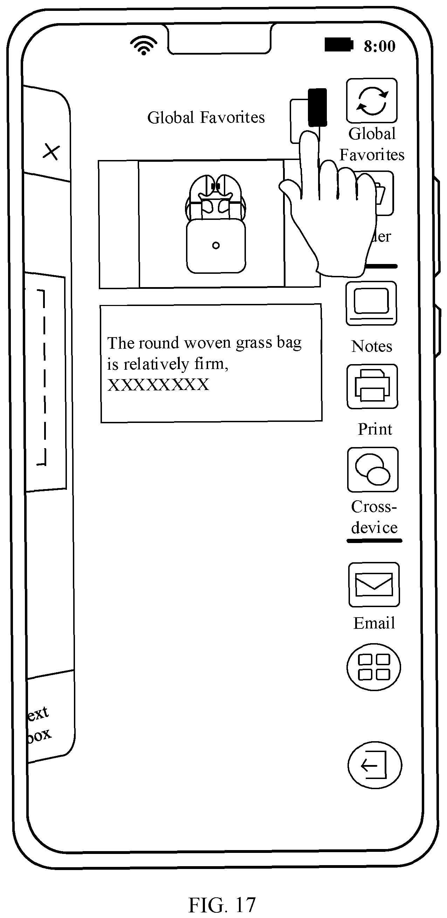

For example, as shown in FIG. 17, after the smart space is fully opened, a virtual button may be displayed around (for example, in FIG. 17, on the right side of) Global Favorites displayed in the central area of the smart space. The user taps the virtual button, and an application corresponding to an application interface in space displayed in the central area of the smart space may be displayed above the interface 10 in a form of a floating window.

In a complete embodiment, FIG. 16B may be replaced with FIG. 17. To be specific, the operation of fully opening the smart space in FIG. 16A triggers the electronic device to display an interface shown in FIG. 17. The user taps, in the interface shown in FIG. 17, the virtual button on the right side of Global Favorites displayed in the central area of the smart space, to trigger the electronic device to display FIG. 16C. The virtual button is used to trigger the electronic device to display, through floating, content of Global Favorites above an interface existing before the smart space is opened.

Certainly, in this embodiment of this application, Global Favorites is used as an example. In an actual application, if after the smart space is fully opened, content of another first-type application is displayed in the central area of the smart space, and the virtual button is displayed around the content, the virtual button is used to trigger the electronic device to display the interface existing before the smart space is opened and display, through floating above the interface existing before the smart space is opened, the content of the application displayed in the central area after the smart space is opened.

For example, Folder is the application in the space displayed in the central area after the smart space is opened. After the smart space is opened, content of Folder is displayed in the central area of the smart space. The user taps the virtual button in the interface to trigger the electronic device to display the interface existing before the smart space is opened and display the content of Folder through floating above the interface existing before the smart space is opened. Examples are not provided through illustration in this application.

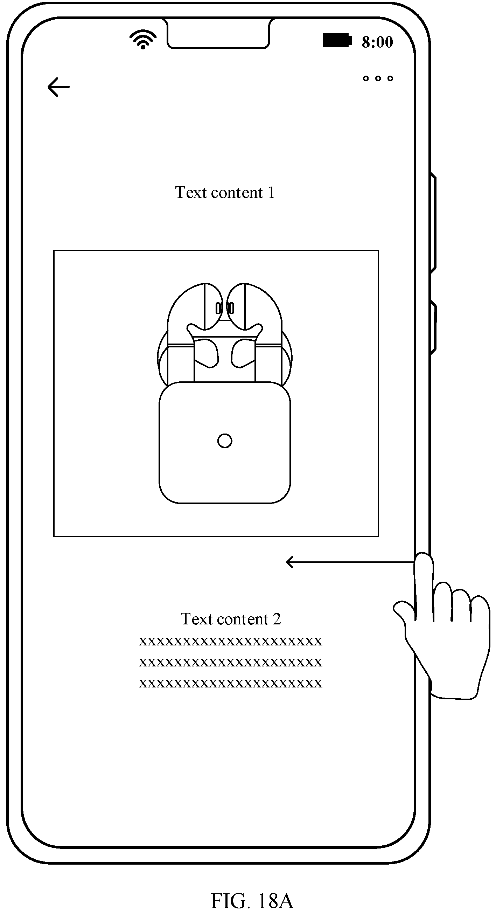

In the example shown in FIG. 16A to FIG. 16F, a first-type application displayed in the sidebar may be displayed in a form of a floating window or a floating ball. Similarly, a third-type application displayed in the sidebar may be displayed in another form. For details, reference may be made to descriptions in an embodiment shown in FIG. 18A to FIG. 18D.

As shown in FIG. 18A, the display screen of the electronic device displays any interface (which may be denoted as an interface 11). When the electronic device displays the any interface, the finger of the user starts to slide leftward from the rightmost side of the display screen of the electronic device. When sliding into the area B, the finger of the user is lifted to half open the smart space.

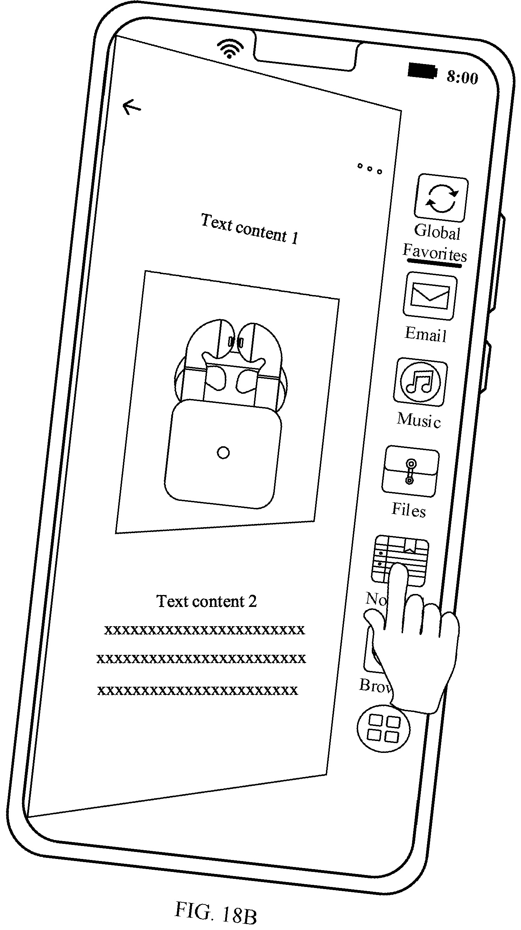

As shown in FIG. 18B, when the smart space is half opened, the user taps any icon of a second-type application to open the application, for example, taps an icon of Notepad to open the Notepad application.

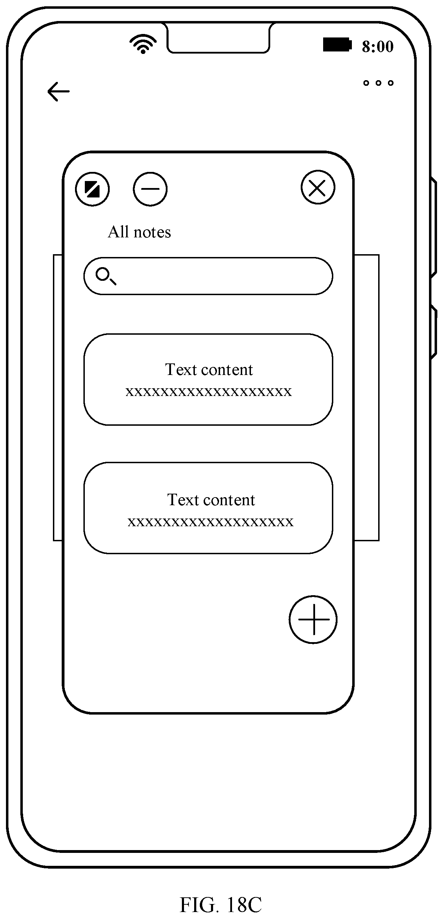

As shown in FIG. 18C, the electronic device displays the interface 11 existing before the smart space is opened, and Notepad is displayed above the interface 11 in a form of a floating window.

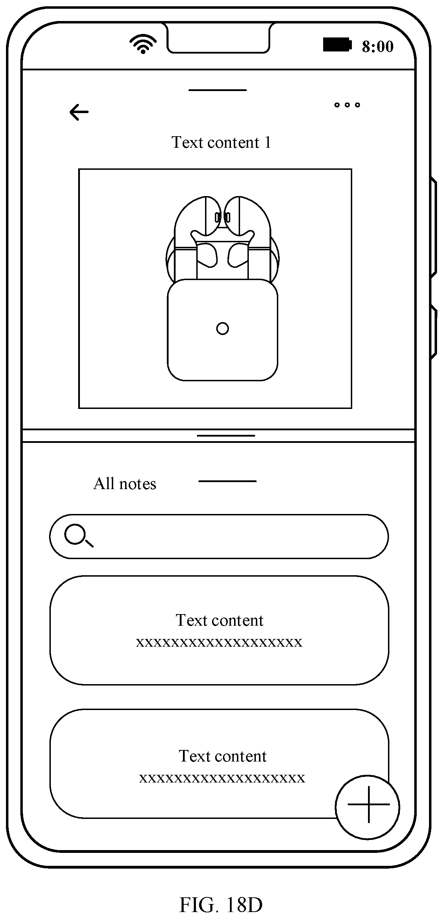

As shown in FIG. 18D, in an interface shown in FIG. 18B, the user touches and holds the icon of Notepad in shortcut applications, and drags the icon of Notepad to the upper side or the lower side of the display screen after the icon is selected, for example, touches and holds the icon of Notepad to select the icon of Notepad, and drags the icon of Notepad to the lower side of the display screen without lifting the finger after the icon of Notepad is selected. In this case, the display screen displays the interface 11 and an interface of Notepad in split screen. The interface 11 is displayed on the upper side, and Notepad is displayed on the lower side of the display screen.

Certainly, after the icon of Notepad is selected, the icon of Notepad is dragged to the upper side of the display screen. In this case, the display screen displays the interface 11 and the interface of Notepad in split screen. The interface 11 is displayed on the lower side, and Notepad is displayed on the upper side of the display screen.

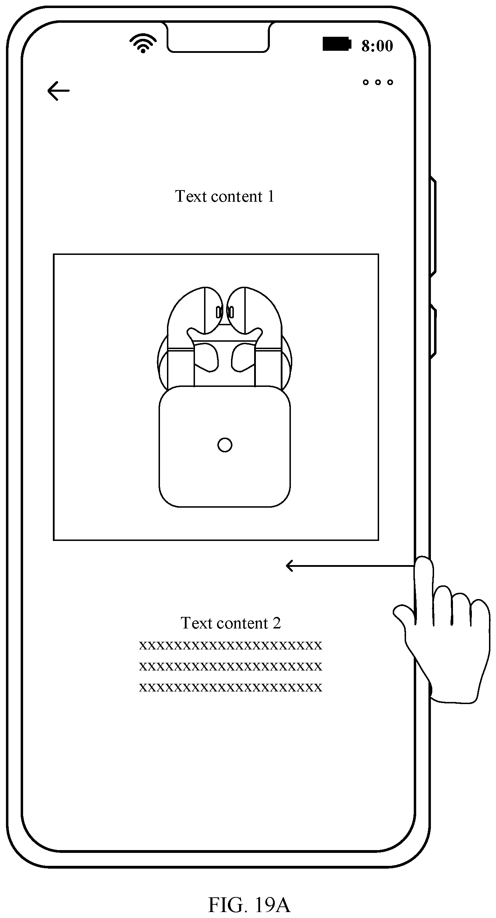

In addition, an adding operation or a deleting operation may be further performed on an application icon in the sidebar. For details, reference may be made to FIG. 19A to FIG. 19F.

As shown in FIG. 19A, the display screen of the electronic device displays any interface. When the electronic device displays the any interface, the finger of the user starts to slide leftward from the rightmost side of the display screen of the electronic device, to half open or fully open the smart space. In this embodiment of this application, for example, the smart space is half opened.

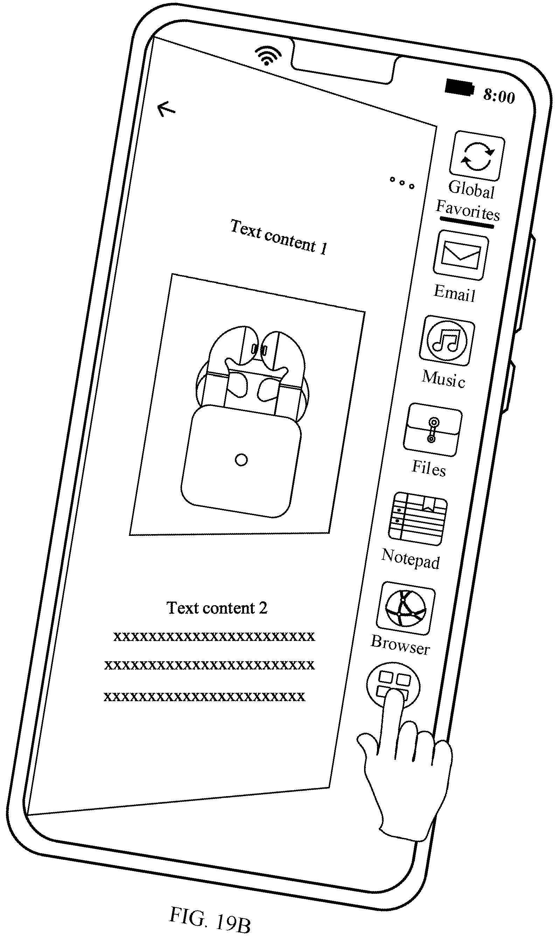

As shown in FIG. 19B, the smart space is partially opened, and an interface displayed by the electronic device includes the sidebar. The user taps an icon of a setting entry in the sidebar.

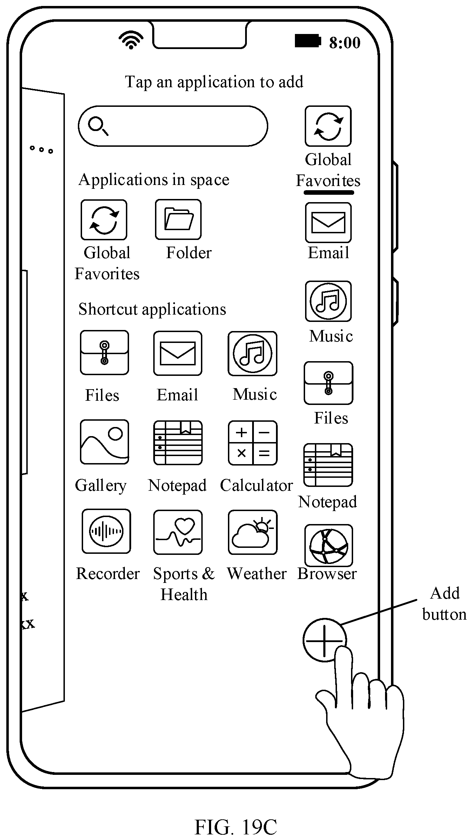

As shown in FIG. 19C, the electronic device displays a sidebar icon setting interface. The setting interface includes two parts. One part is first-type applications: Global Favorites and Folder. The other part is second-type applications: Files, Email, Music, .... For example, this part of displayed applications do not represent all applications in the electronic device, but are third-type applications that may be disposed in the sidebar for use by the user. An add button is displayed in the right-side sidebar. The user taps the add button to enter an adding interface.

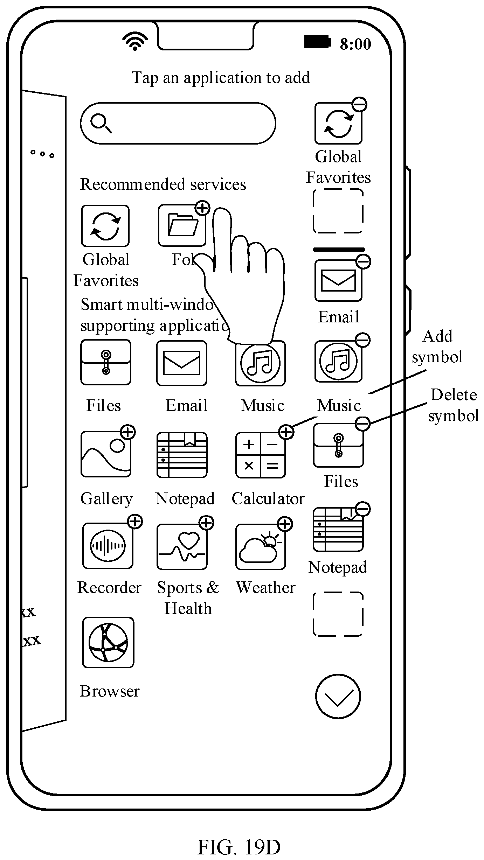

As shown in FIG. 19D, the electronic device displays the adding interface, and an add symbol is displayed in an upper right corner of an application icon that is in the adding interface and that has not been added to the sidebar. The user may tap the add button to add a corresponding application to the sidebar. A delete symbol is displayed in an upper right corner of an application icon in the sidebar. The user may tap the delete button to delete a corresponding application in the sidebar from the sidebar. For example, the user may select an add symbol displayed in an upper right corner of Folder.

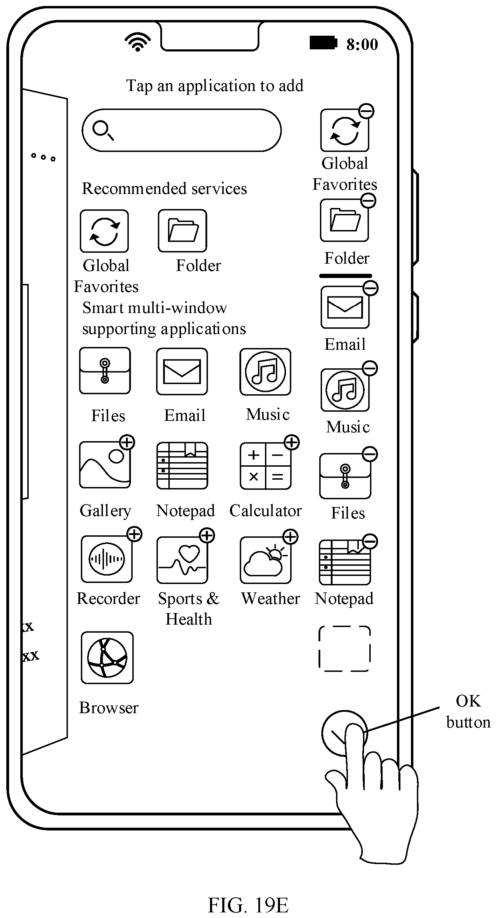

As shown in FIG. 19E, after the user taps the add symbol displayed in the upper right corner of Folder, Folder is added to applications in the space. The user taps an "OK button" below the sidebar, so that a current operation of adding or deleting a sidebar application icon takes effect.

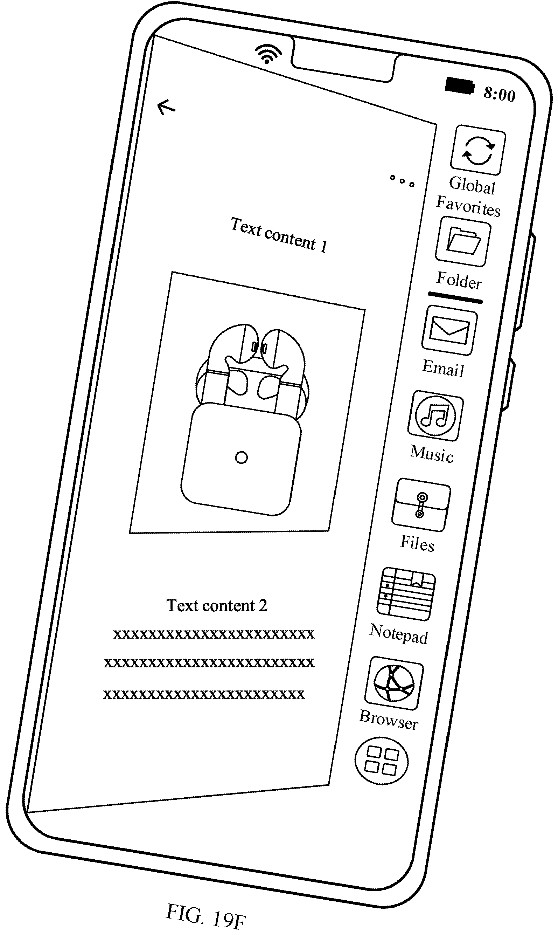

As shown in FIG. 19F, Folder is added to the sidebar. In the interface shown in FIG. 19B, the applications in the space include Global Favorites. After operations in FIG. 19C to FIG. 19E are performed, in an interface shown in FIG. 19F, the applications in the space displayed in the sidebar include Global Favorites and Folder.

In the foregoing example, an example in which the finger of the user slides to the left side to trigger the electronic device to open the smart space is used. In an actual application, the user may alternatively use the finger to slide to the right side, to trigger the electronic device to open the smart space. When the finger of the user slides to the right side to trigger the electronic device to open the smart space, content on the left side and content on the right side of an interface displayed by the electronic device are exchanged. For example, the sidebar is displayed on the left side, an interface displayed by the electronic device before the smart space is opened (or a distorted image corresponding to the interface) is pushed to the right side and displayed, and an object stored or added to favorites is still displayed in the middle area. For an object processing method related to the interface of the smart space existing after the content on the left side and the content on the right side are exchanged, reference may be made to the descriptions in the foregoing embodiments, and adaptive modification is performed. Other information that is unrelated to this application and that is displayed in each interface in this embodiment of this application is used only as an example, and does not impose any limitation on this application. In addition, some content in the interface in the foregoing example may be removed without affecting the object processing function provided in this embodiment of this application.

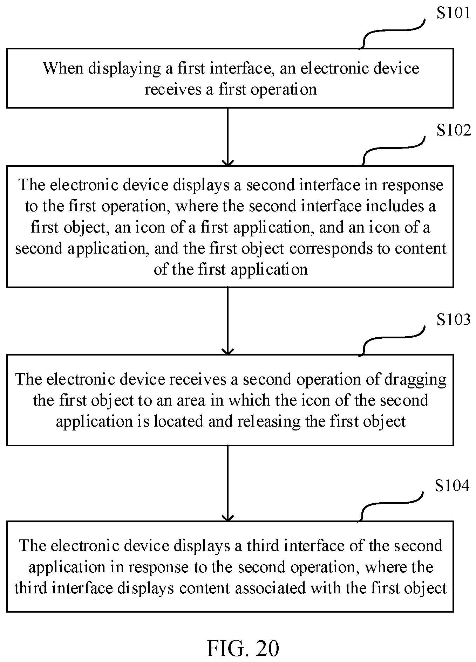

In another embodiment of this application, as shown in FIG. 20, an object processing method provided in this application includes the following steps:
S101: When displaying a first interface, an electronic device receives a first operation.
S102: The electronic device displays a second interface in response to the first operation, where the second interface includes a first object, an icon of a first application, and an icon of a second application, and the first object corresponds to content of the first application.
S103: The electronic device receives a second operation of dragging the first object to an area in which the icon of the second application is located and releasing the first object.
S104: The electronic device displays a third interface of the second application in response to the second operation, where the third interface displays content associated with the first object.

In this embodiment of this application, the first interface may be an interface displayed by the electronic device before smart space is opened in the foregoing embodiment. The interface may be an interface, other than a leftmost home screen, that can be displayed by the electronic device, for example, a system desktop or an interface of an application in the electronic device, may be the interface shown in FIG. 11A, or the like. The first operation may be an operation of fully opening the smart space in the foregoing embodiment, for example, a gesture operation in which a finger of a user starts to slide into an area C from the rightmost side to the left side of the display screen. The second interface is any actual interface corresponding to the conceptual interface shown in FIG. 2D, for example, the interface shown in FIG. 11B and an interface existing after the smart space is fully opened in another embodiment. The first object may be any object displayed in an area B after the smart space is opened, and the first application may be a first-type application storing the first object. The second application may be a third-type application corresponding to the first object.

Although an example in which the third-type application is displayed in a sidebar only when an object is selected is used in the foregoing embodiment, in an actual application, the following setting may alternatively be performed: A plurality of third-type applications are displayed once the smart space is opened and the sidebar is displayed.

For example, the first object is a first file, the second application is a printing application, and the third interface is a printing setting interface.

In another embodiment of this application, the second operation includes a third operation and a fourth operation.

That the electronic device receives a second operation of dragging the first object to an area in which the icon of the second application is located and releasing the first object includes:
The electronic device receives the third operation of selecting the first object.

The electronic device displays a first control in the second interface in response to the third operation. Content of the first object is displayed on the first control.

The electronic device receives the fourth operation of dragging the first control to the area in which the icon of the second application is located and releasing the first control. The fourth operation is a dynamic gesture operation continuous with the third operation.

Correspondingly, that the electronic device displays a third interface of the second application in response to the second operation includes:
The electronic device displays the third interface of the second application in response to the fourth operation.

In this application, the first control may be a floating-state first object. A continuous dynamic gesture operation may be a plurality of continuous gesture operations in a case in which the user does not lift the finger. For example, the third operation may be a touching and holding operation performed on the first object, to select the first object, and selecting the first object indicates that the first object is used as an operation object for a subsequent continuous gesture operation performed by the user. The fourth operation is a sliding operation in a case in which the user does not lift the finger after touching and holding the first object.

In another embodiment of this application, the electronic device includes a display screen, the first object in the second interface is displayed in a first area of the display screen, and the icon of the first application and the icon of the second application in the second interface are displayed in a second area of the display screen.

When the first operation is an operation of sliding leftward from a right edge of the display screen, the first area is located on the left side of the second area; and
when the first operation is an operation of sliding rightward from a left edge of the display screen, the first area is located on the right side of the second area.

In this embodiment of this application, the first area is the area B in the foregoing embodiment, and the second area is an area A in the foregoing embodiment.

In another embodiment of this application, the first interface is an interface of a third application, the second interface displayed by the electronic device in response to the first operation further includes a first image, and the first image is a part of content of the first interface; and when the electronic device displays the second interface, the method further includes:
The electronic device receives a fifth operation of dragging the first object to an area in which the first image is located and releasing the first object.

The electronic device displays a fourth interface of the third application in response to the fifth operation. The fourth interface displays content associated with the first object.

In this application, the first image is an image displayed in a partial area of a deformed interface of the area C after the smart space is opened, and the fifth operation is an operation of dragging the first object to the area C. For example, a schematic interface diagram shown in FIG. 7A to FIG. 7D shows an example in which the third interface of the third application is displayed after the first object is dragged to the area in which the first image is located. The first object is the first file, the third application is an instant messaging application, and the fourth interface is an interface existing after the instant messaging application sends the first file.

In another embodiment of this application, the first image in the second interface is displayed in a third area of the display screen, and the first object in the second interface is displayed in a first area of the display screen.

When the first operation is an operation of sliding leftward from a right edge of the display screen, the third area is located on the left side of the first area; and
when the first operation is an operation of sliding rightward from a left edge of the display screen, the third area is located on the right side of the first area.

In this embodiment of this application, the third area is the area C in the foregoing embodiment.

In another embodiment of this application, the electronic device includes a display screen, and before the electronic device displays the first interface, the method further includes:
When displaying a fifth interface, the electronic device receives a sixth operation of dragging a second object in the fifth interface to a fourth area of the display screen.

The electronic device displays a sixth interface in response to the sixth operation, where the sixth interface includes the icon of the first application; and the electronic device receives a seventh operation of dragging the second object in the fourth area to an area in which the icon of the first application is located and releasing the second object.

The electronic device displays the fifth interface or a seventh interface in response to the seventh operation. The fifth interface displays, for first duration, information indicating that storage succeeds, the seventh interface displays content of the first application, and the content of the first application includes the first object.

The fifth interface in this embodiment of this application may be an interface including the second object, for example, the interface shown in FIG. 5A, and the second object may be a file sent by a friend. The third area may be the area A in the figure, or certainly, may not be the area A.

In another embodiment of this application, the sixth operation includes an eighth operation and a ninth operation, and that the electronic device receives a sixth operation of dragging a second object in the fifth interface to a fourth area of the display screen includes:
The electronic device receives the eighth operation of selecting the second object.

The electronic device displays a second control in the fifth interface in response to the eighth operation. Content of the second object is displayed on the second control.

The electronic device receives the ninth operation of dragging the second control to the fourth area.

Correspondingly, that the electronic device displays a sixth interface in response to the sixth operation includes:
In response to the ninth operation, the electronic device displays the sixth interface including the second control.

A floating-state second object may be the second control. For details of this embodiment, reference may be made to FIG. 5A to FIG. 5D or FIG. 6A to FIG. 6D.

In another embodiment of this application, the icon of the first application in the sixth interface is displayed in a second area of the display screen, and the first object in the seventh interface is displayed in a first area of the display screen.

When the first operation is an operation of sliding leftward from a right edge of the screen, the fourth area is located on the right side of the display screen; and
when the first operation is an operation of sliding rightward from a left edge of the display screen, the fourth area is located on the left side of the display screen.

In another embodiment of this application, the seventh operation is a dynamic gesture operation continuous with the sixth operation, and the ninth operation is a dynamic gesture operation continuous with the eighth operation; and
the ninth operation is an operation of dragging the second control to the fourth area and displaying the second control in the fourth area for second duration.

In another embodiment of this application, the sixth interface further includes the icon of the second application; and when the electronic device displays the sixth interface including the second control, the method further includes:
The electronic device receives a tenth operation of dragging the second control to an area in which the icon of the second application is located and releasing the second control, and the electronic device displays an eighth interface of the second application in response to the tenth operation. The eighth interface displays content associated with the second object.

In this embodiment of this application, reference may be made to the embodiments shown in FIG. 13A to FIG. 13C to FIG. 15A to FIG. 15D in which an object in an interface displayed by the electronic device is selected and dragged to the fourth area to trigger the smart space to be opened and then further dragged to an application icon related to the selected object for processing.

In another embodiment of this application, the second object and the first object are same objects located in different interfaces, content displayed in the eighth interface and the third interface is the same, and the tenth operation is a dynamic gesture operation continuous with the sixth operation.

In another embodiment of this application, before the electronic device receives the second operation of dragging the first object to the area in which the icon of the second application is located and releasing the first object, the second interface displayed by the electronic device further includes a third object; and when the electronic device displays the second interface including the third object, the method further includes:
The electronic device receives an eleventh operation of selecting the third object.

The electronic device displays a third control and an icon of a fourth application in the second interface in response to the eleventh operation. Content of the third object is displayed on the third control.

The electronic device receives a twelfth operation of dragging the third control to an area in which the icon of the fourth application is located and releasing the third control. The twelfth operation is a dynamic gesture operation continuous with the eleventh operation.

The electronic device displays a ninth interface of the fourth application in response to the twelfth operation. The ninth interface displays content associated with the third object.

In this embodiment of this application, the third object may be an object different from the first object in the second interface, and a processing manner of the third object may be the same as or different from that of the first object. In other words, for processing of the third object, reference may be made to a processing manner of any object in the area B of the smart space in the foregoing embodiment.

In another embodiment of this application, the icon of the fourth application is displayed in a second area of the display screen, and the third object in the second interface is displayed in a first area of the display screen. The fourth application is a third-type application.

In another embodiment of this application, the first operation includes a thirteenth operation and a fourteenth operation, and that an electronic device receives a first operation includes:
The electronic device receives the thirteenth operation of sliding leftward from a right edge of the display screen.

The electronic device displays a tenth interface in response to the thirteenth operation. The tenth interface displays a third image and the icon of the first application, and the third image is content of the first interface.

The electronic device receives the fourteenth operation of sliding leftward and performing a release. The fourteenth operation is continuous with the thirteenth operation.

Correspondingly, that the electronic device displays a second interface in response to the first operation includes:
The electronic device displays the second interface in response to the fourteenth operation.

In this application, as shown in FIG. 2A to FIG. 2D and FIG. 3A to FIG. 3D, the first operation of sliding leftward by the user to open the smart space may be divided into the thirteenth operation of sliding from the area A to the area B and the fourteenth operation of continuously sliding from the area B to the area C.

In another embodiment of this application, when the electronic device displays the tenth interface, the method further includes:
The electronic device detects a release operation corresponding to the thirteenth operation.

The electronic device maintains display of the tenth interface in response to the release operation continuous with the thirteenth operation.

In this application, FIG. 18 shows half opening, and an operation of sliding from the area A to the area B and then performing a release triggers the electronic device to half open the smart space.

In another embodiment of this application, the third image is displayed in a fifth area of the display screen, and the icon of the first application in the tenth interface is displayed in a second area of the display screen; when the first operation is an operation of sliding leftward from the right edge of the display screen, the fifth area is located on the left side of the second area; and when the first operation is an operation of sliding rightward from a left edge of the screen, the fifth area is located on the right side of the second area.

The fifth area may include the first area and the third area, that is, an area corresponding to the area B and the area C.

It should be understood that sequence numbers of the steps in the foregoing embodiments do not mean execution sequences. The execution sequences of the processes should be determined based on functions and internal logic of the processes, and should not be construed as any limitation on the implementation processes of embodiments of this application.

An embodiment of this application further provides a computer-readable storage medium. The computer-readable storage medium stores a computer program, and when the computer program is executed by a processor, the steps in the foregoing method embodiments may be implemented.

An embodiment of this application further provides a computer program product. When the computer program product runs on an electronic device, the electronic device is enabled to implement the steps in the foregoing method embodiments.

When an integrated unit is implemented in a form of a software functional unit and sold or used as an independent product, the integrated unit may be stored in a computer-readable storage medium. Based on such an understanding, in this application, all or some of the procedures in the methods in the foregoing embodiments may be implemented by a computer program instructing related hardware. The computer program may be stored in a computer-readable storage medium. When the computer program is executed by a processor, the steps in the foregoing method embodiments may be implemented. The computer program includes computer program code, and the computer program code may be in a source code form, an object code form, an executable file form, some intermediate forms, or the like. The computer-readable medium may include at least any entity or apparatus that can carry the computer program code to a first device, a recording medium, a computer memory, a read-only memory (ROM, Read-Only Memory), a random access memory (RAM, Random Access Memory), an electrical carrier signal, a telecommunications signal, and a software distribution medium, for example, a USB flash drive, a removable hard disk, a magnetic disk, or an optical disc. In some jurisdictions, the computer-readable medium cannot be an electrical carrier signal or a telecommunications signal according to legislation and patent practice.

An embodiment of this application further provides a chip system. The chip system includes a processor. The processor is coupled to a memory, and the processor executes a computer program stored in the memory, to implement the steps in any method embodiment of this application. The chip system may be a single chip or a chip module including a plurality of chips.

In the foregoing embodiments, the descriptions of the embodiments have respective focuses. For a part that is not detailed or described in an embodiment, reference may be made to related descriptions in other embodiments.

Persons of ordinary skill in the art may be aware that the example units and method steps described with reference to the embodiments disclosed in this specification can be implemented by electronic hardware or a combination of computer software and electronic hardware. Whether these functions are performed by hardware or software depends on specific applications and design constraints of the technical solutions. Persons skilled in the art may use different methods to implement the described functions for each specific application, but it should not be considered that such an implementation goes beyond the scope of this application.

The foregoing embodiments are merely used to describe the technical solutions of this application, but not limit the technical solutions of this application. Although this application is described in detail with reference to the foregoing embodiments, persons of ordinary skill in the art should understand that they may still modify the technical solutions described in the foregoing embodiments, or perform equivalent replacement on some technical features. However, these modifications or replacements do not make the essence of the corresponding technical solutions depart from the spirit and scope of the technical solutions in the embodiments of this application, and shall fall within the protection scope of this application.

## Claims

1. An object processing method, wherein the method comprises:
when displaying a first interface, receiving, by an electronic device, a first operation;
displaying, by the electronic device, a second interface in response to the first operation, wherein the second interface comprises a first object, an icon of a first application, and an icon of a second application, and the first object corresponds to content of the first application;
receiving, by the electronic device, a second operation of dragging the first object to an area in which the icon of the second application is located and releasing the first object; and
displaying, by the electronic device, a third interface of the second application in response to the second operation, wherein the third interface displays content associated with the first object.

2. The method according to claim 1, wherein the second operation comprises a third operation and a fourth operation;
the receiving, by the electronic device, a second operation of dragging the first object to an area in which the icon of the second application is located and releasing the first object comprises:
receiving, by the electronic device, the third operation of selecting the first object;
displaying, by the electronic device, a first control in the second interface in response to the third operation, wherein content of the first object is displayed on the first control; and
receiving, by the electronic device, the fourth operation of dragging the first control to the area in which the icon of the second application is located and releasing the first control, wherein the fourth operation is a dynamic gesture operation continuous with the third operation; and
correspondingly, the displaying, by the electronic device, a third interface of the second application in response to the second operation comprises:
displaying, by the electronic device, the third interface of the second application in response to the fourth operation.

3. The method according to claim 1 or 2, wherein the electronic device comprises a display screen, the first object in the second interface is displayed in a first area of the display screen, and the icon of the first application and the icon of the second application in the second interface are displayed in a second area of the display screen;
when the first operation is an operation of sliding leftward from a right edge of the display screen, the first area is located on the left side of the second area; and
when the first operation is an operation of sliding rightward from a left edge of the display screen, the first area is located on the right side of the second area.

4. The method according to claim 1 or 2, wherein the first interface is an interface of a third application, the second interface displayed by the electronic device in response to the first operation further comprises a first image, and the first image is a part of content of the first interface; and when the electronic device displays the second interface, the method further comprises:
receiving, by the electronic device, a fifth operation of dragging the first object to an area in which the first image is located and releasing the first object; and
displaying, by the electronic device, a fourth interface of the third application in response to the fifth operation, wherein the fourth interface displays content associated with the first object.

5. The method according to claim 4, wherein the electronic device comprises a display screen, the first image in the second interface is displayed in a third area of the display screen, and the first object in the second interface is displayed in a first area of the display screen;
when the first operation is an operation of sliding leftward from a right edge of the display screen, the third area is located on the left side of the first area; and
when the first operation is an operation of sliding rightward from a left edge of the display screen, the third area is located on the right side of the first area.

6. The method according to claim 1 or 2, wherein the electronic device comprises a display screen, and before the displaying, by an electronic device, a first interface, the method further comprises:
when displaying a fifth interface, receiving, by the electronic device, a sixth operation of dragging a second object in the fifth interface to a fourth area of the display screen;
displaying, by the electronic device, a sixth interface in response to the sixth operation, wherein the sixth interface comprises the icon of the first application; and receiving, by the electronic device, a seventh operation of dragging the second object in the fourth area to an area in which the icon of the first application is located and releasing the second object; and
displaying, by the electronic device, the fifth interface or a seventh interface in response to the seventh operation, wherein the fifth interface displays, for first duration, information indicating that storage succeeds, the seventh interface displays content of the first application, and the content of the first application comprises the first object.

7. The method according to claim 6, wherein the sixth operation comprises an eighth operation and a ninth operation, and the receiving, by the electronic device, a sixth operation of dragging a second object in the fifth interface to a fourth area of the display screen comprises:
receiving, by the electronic device, the eighth operation of selecting the second object;
displaying, by the electronic device, a second control in the fifth interface in response to the eighth operation, wherein content of the second object is displayed on the second control; and
receiving, by the electronic device, the ninth operation of dragging the second control to the fourth area; and
correspondingly, the displaying, by the electronic device, a sixth interface in response to the sixth operation comprises:
displaying, by the electronic device in response to the ninth operation, the sixth interface comprising the second control.

8. The method according to claim 7, wherein the icon of the first application in the sixth interface is displayed in a second area of the display screen, and the first object in the seventh interface is displayed in a first area of the display screen;
when the first operation is an operation of sliding leftward from a right edge of the screen, the fourth area is located on the right side of the display screen; and
when the first operation is an operation of sliding rightward from a left edge of the display screen, the fourth area is located on the left side of the display screen.

9. The method according to claim 7 or 8, wherein the seventh operation is a dynamic gesture operation continuous with the sixth operation, and the ninth operation is a dynamic gesture operation continuous with the eighth operation; and
the ninth operation is an operation of dragging the second control to the fourth area and displaying the second control in the fourth area for second duration.

10. The method according to claim 7, wherein the sixth interface further comprises the icon of the second application; and when the electronic device displays the sixth interface comprising the second control, the method further comprises:
receiving, by the electronic device, a tenth operation of dragging the second control to an area in which the icon of the second application is located and releasing the second control, and displaying, by the electronic device, an eighth interface of the second application in response to the tenth operation, wherein the eighth interface displays content associated with the second object.

11. The method according to claim 10, wherein the second object and the first object are same objects located in different interfaces, content displayed in the eighth interface and the third interface is the same, and the tenth operation is a dynamic gesture operation continuous with the sixth operation.

12. The method according to claim 1 or 2, wherein before the receiving, by the electronic device, a second operation of dragging the first object to an area in which the icon of the second application is located and releasing the first object, the second interface displayed by the electronic device further comprises a third object; and when the electronic device displays the second interface comprising the third object, the method further comprises:
receiving, by the electronic device, an eleventh operation of selecting the third object;
displaying, by the electronic device, a third control and an icon of a fourth application in the second interface in response to the eleventh operation, wherein content of the third object is displayed on the third control;
receiving, by the electronic device, a twelfth operation of dragging the third control to an area in which the icon of the fourth application is located and releasing the third control, wherein the twelfth operation is a dynamic gesture operation continuous with the eleventh operation; and
displaying, by the electronic device, a ninth interface of the fourth application in response to the twelfth operation, wherein the ninth interface displays content associated with the third object.

13. The method according to claim 12, wherein the electronic device comprises a display screen, the icon of the fourth application is displayed in a second area of the display screen, and the third object in the second interface is displayed in a first area of the display screen.

14. The method according to claim 1 or 2, wherein the electronic device comprises a display screen, the first operation comprises a thirteenth operation and a fourteenth operation, and the receiving, by an electronic device, a first operation comprises:
receiving, by the electronic device, the thirteenth operation of sliding leftward from a right edge of the display screen;
displaying, by the electronic device, a tenth interface in response to the thirteenth operation, wherein the tenth interface displays a third image and the icon of the first application, and the third image is content of the first interface; and
receiving, by the electronic device, the fourteenth operation of sliding leftward and performing a release, wherein the fourteenth operation is continuous with the thirteenth operation; and
correspondingly, the displaying, by the electronic device, a second interface in response to the first operation comprises:
displaying, by the electronic device, the second interface in response to the fourteenth operation.

15. The method according to claim 14, wherein when the electronic device displays the tenth interface, the method further comprises:
detecting, by the electronic device, a release operation corresponding to the thirteenth operation; and
maintaining, by the electronic device, display of the tenth interface in response to the release operation continuous with the thirteenth operation.

16. The method according to claim 14, wherein the electronic device comprises the display screen, the third image is displayed in a fifth area of the display screen, and the icon of the first application in the tenth interface is displayed in a second area of the display screen; when the first operation is an operation of sliding leftward from the right edge of the display screen, the fifth area is located on the left side of the second area; and when the first operation is an operation of sliding rightward from a left edge of the screen, the fifth area is located on the right side of the second area.

17. The method according to claim 1 or 2, wherein the first object is a first file, the second application is a printing application, and the third interface is a printing setting interface.

18. The method according to claim 4, wherein the first object is a first file, the third application is an instant messaging application, and the fourth interface is an interface existing after the instant messaging application sends the first file.

19. An electronic device, wherein the electronic device comprises a processor, and the processor is configured to run a computer program stored in a memory, so that the electronic device is enabled to implement the method according to any one of claims 1 to 18.

20. A computer-readable storage medium, wherein the computer-readable storage medium stores a computer program, and when the computer program is executed by one or more processors, the method according to any one of claims 1 to 18 is implemented.
